(19) Europäisches Patentamt
European Patent Office
Office européen des brevets

(11) **EP 4 194 318 B1**

(12) **EUROPEAN PATENT SPECIFICATION**

(45) Date of publication and mention
of the grant of the patent:
**19.03.2025 Bulletin 2025/12**

(21) Application number: **21859833.2**

(22) Date of filing: **25.06.2021**

(51) International Patent Classification (IPC):
**B62D 5/04** *(2006.01)* **B62D 7/15** *(2006.01)*
**B62D 7/20** *(2006.01)* **B62D 7/09** *(2006.01)*

(52) Cooperative Patent Classification (CPC):
**B62D 7/1509; B62D 5/0487; B62D 7/20;**
B62D 5/04; B62D 5/0484; B62D 6/002; B62D 7/09

(86) International application number:
**PCT/CN2021/102285**

(87) International publication number:
**WO 2022/041991 (03.03.2022 Gazette 2022/09)**

(54) **INDEPENDENT STEERING MECHANISM, STEERING SYSTEM AND CONTROL METHOD**

UNABHÄNGIGER LENKMECHANISMUS, LENKSYSTEM UND STEUERVERFAHREN

MÉCANISME DE DIRECTION INDÉPENDANT, SYSTÈME DE DIRECTION ET PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2020 CN 202010884717**

(43) Date of publication of application:
**14.06.2023 Bulletin 2023/24**

(73) Proprietor: **Shenzhen Yinwang Intelligent
Technologies Co., Ltd.
Shenzhen, Guangdong 518129 (CN)**

(72) Inventors:
• **LIU, Fengyu**
**Shenzhen, Guangdong 518129 (CN)**
• **LI, Jie**
**Shenzhen, Guangdong 518129 (CN)**
• **WANG, Xing**
**Shenzhen, Guangdong 518129 (CN)**
• **HUANG, Xin**
**Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(56) References cited:
CN-A- 107 826 164    CN-A- 109 760 737
CN-A- 109 850 010    CN-U- 209 833 756
JP-A- 2011 037 394   KR-A- 20140 025 237
US-A1- 2016 339 953  US-A1- 2017 144 694

Description

## TECHNICAL FIELD

This application relates to the vehicle field, and more specifically, to an independent steering mechanism, a steering system, and a control method in a vehicle.

## BACKGROUND

When a vehicle is steered, steering angles of left and right steering wheels are different because steering radii of the left and right steering wheels are different. A steering mechanism is designed according to Ackermann (Ackermann) steering geometry, so that a steering angle of an inner wheel is 2 to 4 degrees greater than a steering angle of an outer wheel during steering of the vehicle, so that the vehicle can be steered smoothly.

To implement a more flexible steering function of a vehicle, a steer-by-wire technology can be applied to a steering system of the vehicle. A conventional vehicle steering system is a mechanical system, and a vehicle steering motion is implemented by manipulating a driving wheel by a driver and transferring the manipulation to steering wheels through a steering gear and a series of rods. For the steer-by-wire technology, a mechanical connection between the driving wheel and the steering wheels is cancelled, and steering is implemented completely by electric energy. Further, left and right steering wheels can be controlled independently, which can better meet requirements of future vehicles and implement flexible steering. However, for the steer-by-wire independent technology, when one of steering motors respectively configured for the left and right steering wheels is faulty, overall steering needs to be recovered, and an independent steering function is lost.

US 2016/0339953 A1 discloses a steering apparatus for an automobile that includes: a steering housing in which a steering drive unit, which moves a left tie rod and a right tie rod to the left and right sides, is disposed; a left mounting bracket which is coupled to a left side of the steering housing and coupled to a left lower arm; and a right mounting bracket which is coupled to a right side of the steering housing and coupled to a right lower arm.

## SUMMARY

Embodiments of this application provide an independent steering mechanism, a steering system, and a control method. A plurality of power-assisted motors are disposed to implement an independent steering function, and resolve a problem that when one of the power-assisted motors is faulty, independent steering cannot be performed without changing a mechanical structure.

According to a first aspect, an independent steering mechanism is provided, including: a first power-assisted motor, a second power-assisted motor, a third power-assisted motor, and a middle tie rod. The middle tie rod includes a first connecting rod, a second connecting rod, and a third connecting rod, and two ends of the third connecting rod are connected to the first connecting rod and the second connecting rod. The first power-assisted motor is configured to control the first connecting rod to move along an axial direction of the middle tie rod, the second power-assisted motor is configured to control the second connecting rod to move along the axial direction of the middle tie rod, and the third power-assisted motor is configured to control the third connecting rod to rotate, to drive the first connecting rod and the second connecting rod to approach or move away from each other along the axial direction of the middle tie rod.

According to this embodiment of this application, the first power-assisted motor, the second power-assisted motor, and the third power-assisted motor may respectively control the first connecting rod, the second connecting rod, and the third connecting rod, to adjust a length and a position of the middle tie rod. In addition, when one of the three power-assisted motors is faulty, the length and the position of the middle tie rod can still be adjusted by using two power-assisted motors that work normally, without changing a mechanical structure.

With reference to the first aspect, in some implementations of the first aspect, the third connecting rod is of a hollow structure, and the two ends of the third connecting rod are connected to the first connecting rod and the second connecting rod through screw threads.

According to this embodiment of this application, the third connecting rod is of the hollow structure, and the two ends of the third connecting rod are connected to the first connecting rod and the second connecting rod through the screw threads. That is, the third connecting rod is of a socket structure, and one end of the first connecting rod and one end of the second connecting rod are respectively disposed in openings on two sides of the socket structure, and are connected through the screw threads. Alternatively, the first connecting rod and the second connecting rod may be of hollow structures, and the two ends of the third connecting rod are connected to the first connecting rod and the second connecting rod through ball screws or screw nuts. That is, the first connecting rod and the second connecting rod are of socket structures, and the two ends of the third connecting rod are respectively disposed in openings of one end of the first connecting rod and one end of the second connecting rod.

With reference to the first aspect, in some implementations of the first aspect, the screw threads at the two ends of the third connecting rod are rotated in opposite directions.

According to this embodiment of this application, when the screw threads disposed on the first connecting rod and the second connecting rod are rotated in opposite directions, the third motor controls the third connecting rod to rotate, so that the first connecting rod and the second connecting rod approach or move away from each other along the axial direction of the middle tie rod.

With reference to the first aspect, in some implementations of the first aspect, the independent steering mechanism further includes a first transmission part, a second transmission part, and a third transmission part. The first power-assisted motor controls, by using the first transmission part, the first connecting rod to move along the axial direction of the middle tie rod, the second power-assisted motor controls, by using the second transmission part, the second connecting rod to move along the axial direction of the middle tie rod, and the third power-assisted motor controls, by using the third transmission part, the third connecting rod to rotate.

According to this embodiment of this application, a rotational speed of the power-assisted motor is high, and the first transmission part, the second transmission part, and the third transmission part are all of transmission structures of deceleration. In this embodiment of this application, an example in which the first transmission part, the second transmission part, and the third transmission part are of belt transmission structures is used for description, but a structure of the transmission part is not limited. The first transmission part, the second transmission part, and the third transmission part may also be of a rack-and-pinion transmission structure, or may be of a worm-and-gear transmission structure, or may be of a transmission structure of parallel shaft gears.

With reference to the first aspect, in some implementations of the first aspect, the first transmission part includes a first gear, and the first gear is connected to the first connecting rod through a screw thread. The first power-assisted motor drives the first gear to rotate, to control the first connecting rod to move along the axial direction of the middle tie rod.

According to this embodiment of this application, a screw thread may be disposed on a surface on which the first connecting rod is in contact with the first gear, and an inner side (a surface on which the first gear is in contact with the first connecting rod) of the first gear may be of a screw nut or a ball screw structure. When the first power-assisted motor drives the first gear to rotate, the screw nut or the ball screw structure of the first gear is combined with the screw thread structure of the first connecting rod to drive the first connecting rod to move along the axial direction of the middle tie rod. A tooth may be disposed on an outer side (a surface on which the first gear is in contact with a first transmission belt) of the first gear, and may be meshed with a tooth disposed on an inner side (a surface on which the first transmission belt is in contact with the first gear) of the first transmission belt, to improve power transmission efficiency.

With reference to the first aspect, in some implementations of the first aspect, the second transmission part includes a second gear, and the second gear is connected to the second connecting rod through a screw thread; and the second power-assisted motor drives the second gear to rotate, to control the second connecting rod to move along the axial direction of the middle tie rod.

According to this embodiment of this application, a screw thread may be disposed on a surface on which the second connecting rod is in contact with the second gear, and an inner side (a surface on which the second gear is in contact with the second connecting rod) of the second gear may be of a screw nut or a ball screw structure. When the second power-assisted motor drives the second gear to rotate, the screw nut or the ball screw structure of the second gear is combined with the screw thread structure of the second connecting rod to drive the second connecting rod to move along the axial direction of the middle tie rod. A tooth may be disposed on an outer side (a surface on which the second gear is in contact with a second transmission belt) of the second gear, and may be meshed with a tooth disposed on an inner side (a surface on which the second transmission belt is in contact with the second gear) of the second transmission belt, to improve power transmission efficiency.

With reference to the first aspect, in some implementations of the first aspect, the third transmission part includes a third gear. A guiding boss disposed along the axial direction of the middle tie rod is disposed on a surface of the third connecting rod. A guiding groove corresponding to the guiding boss is disposed on the third gear. The third gear is connected to the third connecting rod through the guiding groove and the guiding boss. The third power-assisted motor drives the third gear to rotate, to control the third connecting rod to rotate.

According to this embodiment of this application, a guiding boss may be disposed on a surface on which the third connecting rod is in contact with the third gear, and a guiding groove corresponding to the guiding boss may be disposed on an inner side (a surface on which the third gear is in contact with the third connecting rod) of the third gear. The guiding boss may be disposed along the axial direction of the middle tie rod, so that efficiency of power transmission between the third gear and the third connecting rod can be improved. In addition, disposing of the guiding boss does not affect movement of the third connecting rod along the axial direction of the middle tie rod.

Optionally, a tooth may be disposed on an outer side (a surface on which a third gear 172 is in contact with a third transmission belt 171) of the third gear 172, and may be meshed with a tooth disposed on an inner side (a surface on which the third transmission belt 171 is in contact with the third gear 172) of the third transmission belt 171, to improve power transmission efficiency.

According to a second aspect, an independent steering system is provided, including: a first steering wheel, a second steering wheel, and the independent steering mechanism according to any one of the possible implementations of the first aspect. The first connecting rod in the independent steering mechanism is connected to the first steering wheel, and the second connecting rod in the independent steering mechanism is connected to the second steering wheel. The first power-assisted motor in the independent steering mechanism is configured to control the first connecting rod to move along the axial direction of the middle tie rod in the independent steering mechanism, to enable the first steering wheel to rotate, and the second power-assisted motor in the independent steering mechanism is configured to control the second connecting rod to move along the axial direction of the middle tie rod in the independent steering mechanism, to enable the second steering wheel to rotate.

With reference to the second aspect, in some implementations of the second aspect, the independent steering system further includes: a first steering knuckle, a second steering knuckle, a first steering kingpin, and a second steering kingpin. The first steering wheel is connected to the first steering kingpin through the first steering knuckle, the first steering knuckle is connected to the first connecting rod, and the first power-assisted motor is configured to control the first connecting rod to move along the axial direction of the middle tie rod, to enable the first steering knuckle to drive the first steering wheel to rotate around the first steering kingpin. The second steering wheel is connected to the second steering kingpin through the second steering knuckle, the second steering knuckle is connected to the second connecting rod, and the second power-assisted motor is configured to control the second connecting rod to move along the axial direction of the middle tie rod, to enable the second steering knuckle to drive the second steering wheel to rotate around the second steering kingpin.

With reference to the second aspect, in some implementations of the second aspect, the independent steering system further includes a first tie rod and a second tie rod. One end of the first tie rod is connected to the first connecting rod, and the other end of the first tie rod is connected to the first steering knuckle. One end of the second tie rod is connected to the second connecting rod, and the other end of the second tie rod is connected to the second steering knuckle.

With reference to the second aspect, in some implementations of the second aspect, the independent steering system further includes a control unit. The control unit is configured to determine a target steering angle of the first steering wheel and a target steering angle of the second steering wheel. When the first power-assisted motor or the second power-assisted motor is faulty, the control unit is configured to: control the third power-assisted motor in the independent steering mechanism to adjust a length of the middle tie rod in the independent steering mechanism; and control a normal power-assisted motor in the first power-assisted motor or the second power-assisted motor to adjust a position of the middle tie rod, so that the middle tie rod drives the first steering wheel and the second steering wheel to rotate to a corresponding target steering angle.

With reference to the second aspect, in some implementations of the second aspect, when the first power-assisted motor and the second power-assisted motor are normal, the control unit is specifically configured to: control the first power-assisted motor and the second power-assisted motor to adjust the length of the middle tie rod and the position of the middle tie rod, so that the middle tie rod drives the first steering wheel and the second steering wheel to rotate to the corresponding target steering angle.

With reference to the second aspect, in some implementations of the second aspect, the independent steering system includes: a first electronic control unit ECU, a second ECU, and a third ECU. The control unit is specifically configured to: send a first control instruction to the first ECU, where the first ECU is configured to control the first power-assisted motor according to the first control instruction; send a second control instruction to the second ECU, where the second ECU is configured to control the second power-assisted motor according to the second control instruction; and send a third control instruction to the third ECU, where the third ECU is configured to control the third power-assisted motor according to the third control instruction.

With reference to the second aspect, in some implementations of the second aspect, the control unit is specifically configured to: determine a target position of the first connecting rod and a target position of the second connecting rod based on the target steering angle of the first steering wheel and the target steering angle of the second steering wheel; and determine a target length of the middle tie rod based on the target position of the first connecting rod and the target position of the second connecting rod. The control unit calculates a target rotation angle of the third connecting rod in the independent steering mechanism based on the target length; controls, based on the target rotation angle, the third power-assisted motor to adjust the length of the middle tie rod to the target length, and controls, based on the target position of the first connecting rod and the target position of the second connecting rod, the normal power-assisted motor in the first power-assisted motor or the second power-assisted motor to adjust the first connecting rod and the second connecting rod to a corresponding target position.

With reference to the second aspect, in some implementations of the second aspect, the two ends of the third connecting rod are connected to the first connecting rod and the second connecting rod through the screw threads, and the target rotation angle satisfies the following formula:

$$\theta = \frac{L - L_0}{2i_{ang}},$$

where

L is the target length of the middle tie rod, $L_0$ is a shortest length of the middle tie rod, and $i_{ang}$ is a lead of the screw thread.

With reference to the second aspect, in some implementations of the second aspect, the control unit is specifically configured to: send the third control instruction to the third ECU, where the third control instruction is used to indicate the third ECU to control the third power-assisted motor to output torque, so that the length of the middle tie rod is the target length. The third ECU controls the third power-assisted motor according to the third control instruction.

With reference to the second aspect, in some implementations of the second aspect, the control unit is specifically configured to: send the first control instruction to the first ECU, where the first control instruction is used to indicate the first ECU to control the first power-assisted motor to output torque, so that the first connecting rod and the second connecting rod rotate to the corresponding target position, or send the second control instruction to the second ECU, where the second control instruction is used to indicate the second ECU to control the second power-assisted motor to output torque, so that the first connecting rod and the second connecting rod reach the corresponding target position.

With reference to the second aspect, in some implementations of the second aspect, the independent steering system further includes: a first sensor, a second sensor, and a third sensor. The first sensor is configured to determine position information of the first connecting rod, the second sensor is configured to determine position information of the second connecting rod; and the third sensor is configured to determine length information of the middle tie rod.

With reference to the second aspect, in some implementations of the second aspect, the control unit is specifically configured to determine the first control instruction, the second control instruction, or the third control instruction based on the position information of the first connecting rod, the position information of the second connecting rod, and the length information of the middle tie rod.

With reference to the second aspect, in some implementations of the second aspect, the first sensor is a translational position sensor or an angular position sensor.

With reference to the second aspect, in some implementations of the second aspect, the second sensor is a translational position sensor or an angular position sensor.

With reference to the second aspect, in some implementations of the second aspect, the third sensor is an angular position sensor.

According to a third aspect, a control method for an independent steering system is provided. The independent steering system includes: a control unit, a first steering wheel, a second steering wheel, and the independent steering mechanism according to any one of the possible implementations of the first aspect. The first steering wheel and the second steering wheel are respectively connected to the first connecting rod and the second connecting rod of the middle tie rod in the independent steering mechanism, and the method includes: The control unit determines a target steering angle of the first steering wheel and a target steering angle of the second steering wheel. When the first power-assisted motor or the second power-assisted motor in the independent steering mechanism is faulty, the control unit controls the third power-assisted motor in the independent steering mechanism to adjust a length of the middle tie rod in the independent steering mechanism, and controls a normal power-assisted motor in the first power-assisted motor or the second power-assisted motor to adjust a position of the middle tie rod, so that the middle tie rod drives the first steering wheel and the second steering wheel to rotate to a corresponding target steering angle.

With reference to the third aspect, in some implementations of the third aspect, the control method further includes: When the first power-assisted motor and the second power-assisted motor are normal, the control unit controls the first power-assisted motor and the second power-assisted motor to adjust the length of the middle tie rod and the position of the middle tie rod, so that the middle tie rod drives the first steering wheel and the second steering wheel to rotate to the corresponding target steering angle.

With reference to the third aspect, in some implementations of the third aspect, the independent steering system includes: a first ECU, a second ECU, and a third ECU. The first ECU is configured to control the first power-assisted motor, the second ECU is configured to control the second power-assisted motor, and the third ECU is configured to control the third power-assisted motor. The method further includes: The control unit receives first information sent by the first ECU, where the first information is used to indicate whether the first power-assisted motor is faulty. The control unit receives second information sent by the second ECU, where the second information is used to indicate whether the second power-assisted motor is faulty. The control unit receives third information sent by the third ECU, where the third information is used to indicate whether the third power-assisted motor is faulty.

With reference to the third aspect, in some implementations of the third aspect, that the control unit controls the third power-assisted motor in the independent steering mechanism to adjust a length of the middle tie rod in the independent steering mechanism, and controls a normal power-assisted motor in the first power-assisted motor or the second power-assisted motor to adjust a position of the middle tie rod includes: The control unit determines a target position of the first connecting rod and a target position of the second connecting rod based on the target steering angle of the first steering wheel and the target steering angle of the second steering wheel. The control unit determines a target length of the middle tie rod based on the target position of the first connecting rod and the target position of the second connecting rod. The control unit calculates a target rotation angle of the third connecting rod in the independent steering mechanism based on the target length. The control unit controls, based on the target rotation angle, the third power-assisted motor to adjust the length of the middle tie rod to the target length, and controls, based on the target position of the first connecting rod and the target position of the second connecting rod, the normal power-assisted motor in the first power-assisted motor or the second power-assisted motor to adjust the first connecting rod and the second connecting rod to a corresponding target position.

With reference to the third aspect, in some implementations of the third aspect, the two ends of the third connecting rod are connected to the first connecting rod and the second connecting rod through the screw threads, and the target rotation angle satisfies the following formula:

$$\theta = \frac{L - L_0}{2i_{ang}},$$

where

L is the target length of the middle tie rod, $L_0$ is a shortest length of the middle tie rod, and $i_{ang}$ is a lead of the screw thread.

With reference to the third aspect, in some implementations of the third aspect, that the control unit controls, based on the target rotation angle, the third power-assisted motor to adjust the length of the middle tie rod to the target length includes: The control unit sends a third control instruction to the third ECU, where the third control instruction is used to indicate the third ECU to control the third power-assisted motor to output torque, so that the length of the middle tie rod is the target length; and the third ECU controls the third power-assisted motor according to the third control instruction.

With reference to the third aspect, in some implementations of the third aspect, that the control unit controls, based on the target position of the first connecting rod and the target position of the second connecting rod, the normal power-assisted motor in the first power-assisted motor or the second power-assisted motor to adjust the first connecting rod and the second connecting rod to a corresponding target position includes: The control unit sends a first control instruction to the first ECU, where the first control instruction is used to indicate the first ECU to control the first power-assisted motor to output torque, so that the first connecting rod and the second connecting rod rotate to the corresponding target position. Alternatively, the control unit sends a second control instruction to the second ECU, where the second control instruction is used to indicate the second ECU to control the second power-assisted motor to output torque, so that the first connecting rod and the second connecting rod reach the corresponding target position.

According to a fourth aspect, a vehicle is provided, including the independent steering system according to any one of the possible implementations of the second aspect. An independent steering mechanism in the independent steering system controls steering wheels to perform steering by adjusting a length and a position of a middle tie rod.

According to a fifth aspect, a control apparatus is provided. The control apparatus includes a processing unit and a storage unit. The storage unit is configured to store instructions. The processing unit executes the instructions stored in the storage unit, so that the control apparatus performs any possible method according to the third aspect.

Optionally, the control apparatus may be an independent controller in a vehicle, or may be a chip having a control function in the vehicle. The processing unit may be a processor. The storage unit may be a memory (for example, a register or cache) in the chip, or a storage unit (for example, a read-only memory or a random access memory) that is in the vehicle and that is located outside the chip.

It should be noted that, in the foregoing controller, the memory is coupled to the processor. That the memory is coupled to the processor may be understood as that the memory is located inside the processor, or the memory is located outside the processor, to be independent of the processor.

According to a sixth aspect, a computer program product is provided, the computer program product includes computer program code, and when the computer program code is run on a computer, the computer performs the method according to the foregoing aspects.

It should be noted that all or some of the computer program code may be stored in a first storage medium. The first storage medium may be encapsulated together with a processor, or may be encapsulated separately from a processor. This is not specifically limited in embodiments of this application.

According to a seventh aspect, a computer-readable medium is provided. The computer-readable medium stores program code. When the computer program code is run on a computer, the computer performs the method in the foregoing aspects.

## BRIEF DESCRIPTION OF DRAWINGS

FIG. 1 is a schematic diagram of conventional vehicle steering;

FIG. 2 shows a steer-by-wire independent system according to the conventional technology;

FIG. 3 shows an independent steering mechanism according to an embodiment of this application;

FIG. 4 is a three-dimensional schematic diagram of an independent steering mechanism according to an embodiment of this application;

FIG. 5 is a cross-sectional view of a third gear according to an embodiment of this application;

FIG. 6 is a cross-sectional view of a third connecting rod according to an embodiment of this application;

FIG. 7 is a schematic diagram of an independent steering system 200 according to an embodiment of this application;

FIG. 8 is a schematic diagram of common steering when a vehicle includes an independent steering system according to an embodiment of this application;

FIG. 9 is a schematic diagram of in-situ steering when a vehicle includes two independent steering systems according to an embodiment of this application;

FIG. 10 is a schematic diagram of vehicle translation according to an embodiment of this application;

FIG. 11 is a schematic diagram of vehicle steering in a small radius according to an embodiment of this application;

FIG. 12 is a schematic diagram corresponding to a failure of a third power-assisted motor according to an embodiment of this application;

FIG. 13 is a schematic diagram corresponding to a failure of a first power-assisted motor according to an embodiment of this application;

FIG. 14 is a schematic diagram corresponding to a failure of a second power-assisted motor according to an embodiment of this application;

FIG. 15 is a schematic diagram of another independent steering system 500 according to an embodiment of this application;

FIG. 16 is a flowchart of a control method according to an embodiment of this application;

FIG. 17 is a schematic diagram of a method for determining different working modes according to an embodiment of this application;

FIG. 18 is a schematic flowchart of controlling a power-assisted motor by a control unit according to an embodiment of this application;

FIG. 19 is a schematic diagram of a control unit according to an embodiment of this application; and

FIG. 20 is a schematic block diagram of a control unit according to another embodiment of this application.

## DESCRIPTION OF EMBODIMENTS

The following describes technical solutions of this application with reference to accompanying drawings.

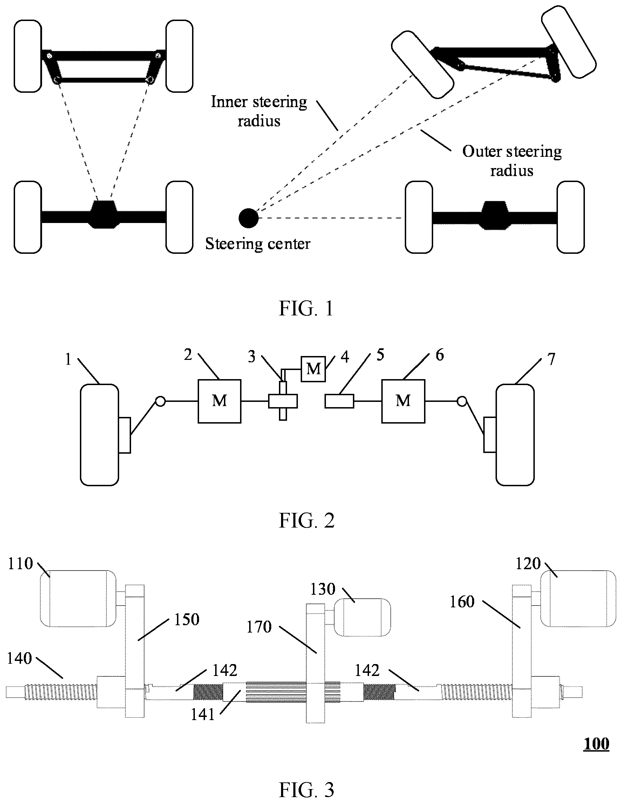

FIG. 1 is a schematic diagram of conventional vehicle steering.

As shown in FIG. 1, when a vehicle is steered, steering angles of left and right steering wheels are different because steering radii of the left and right steering wheels are different. A steering mechanism is designed according to Ackermann steering geometry. When the vehicle turns along a curve, the steering angle of the inner wheel can be 2 to 4 degrees greater than the steering angle of the outer wheel by using equal cranks of four connecting rods, that is, a steering trapezoid shown in FIG. 1. This structure allows centers of steering paths of four wheels of the vehicle to roughly intersect on an extension line of a rear axle, so that the vehicle turns smoothly.

A conventional steering system vehicle is a mechanical system, and a vehicle steering motion is implemented by manipulating a driving wheel by a driver and by transferring the manipulation to steering wheels through a steering gear and a series of rods. The conventional vehicle steering system is limited by a mechanical structure of the conventional vehicle steering system, and steering is not flexible. However, a vehicle steer-by-wire system cancels a mechanical connection between the driving wheel and the steering wheels, and steering is implemented completely by electric energy. Especially for a steer-by-wire independent system, steering motors are respectively configured for the left and right steering wheels, so that the left and right steering wheels can rotate independently, and therefore steering of the vehicle is more flexible.

FIG. 2 shows a steer-by-wire independent system in the conventional technology.

As shown in FIG. 2, a steering wheel 1 and a steering wheel 7 are respectively provided with a steering motor 2 and a steering motor 6. The two motors are independent of each other, and directly drive respectively corresponding steering wheels to perform steering. When one of the steering motor 2 and the steering motor 6 is faulty and stops working, a rotating motor 4 may be used to control a left connecting piece 3 to connect to a right connecting piece 5, to change independent steering into overall steering.

For this structure, the steering motor may be used to directly drive the corresponding steering wheel to steer, and the rotating motor may be used to control separation and combination of left and right connecting pieces. However, when one of the steering motors is faulty, and when the rotating motor 4 controls the connection of the left and right connecting pieces, normal steering is affected, and after the fault occurs, an independent steering capability is lost.

This application provides an independent steering mechanism, an independent steering system, and a control method. A plurality of power-assisted motors are disposed to implement an independent steering function, and resolve a problem that when one of the power-assisted motors is faulty, independent steering cannot be performed without changing a mechanical structure.

FIG. 3 shows an independent steering mechanism according to an embodiment of this application.

As shown in FIG. 3, an independent steering mechanism 100 may include a first power-assisted motor 110, a second power-assisted motor 120, a third power-assisted motor 130, and a middle tie rod 140.

The middle tie rod 140 includes a first connecting rod 142, a second connecting rod 143, and a third connecting rod 141. Two ends of the third connecting rod 141 are connected to the first connecting rod 142 and the second connecting rod 143. The first power-assisted motor 110 is configured to control the first connecting rod 142 to move along an axial direction of the middle tie rod 140. The second power-assisted motor 120 is configured to control the second connecting rod 143 to move along the axial direction of the middle tie rod 140. The third power-assisted motor 130 is configured to control the third connecting rod 141 to rotate to drive the first connecting rod 142 and the second connecting rod 142 to move toward or opposite to each other along the axial direction of the middle tie rod 140, and the first connecting rod 142 and the second connecting rod 142 approach or move away from each other along the axial direction of the middle tie rod 140.

Optionally, the independent steering mechanism 100 may further include a first transmission part 150, a second transmission part 160, and a third transmission part 170. The first power-assisted motor 110 may control, by using the first transmission part 150, the first connecting rod 142 to move along an axial direction of the middle tie rod 140. The second power-assisted motor 120 may control, by using the second transmission part 160, the second connecting rod 143 to move along the axial direction of the middle tie rod 140. The third power-assisted motor 130 may control, by using the third transmission part 170, the third connecting rod 141 to rotate.

Optionally, the third connecting rod 141 is of a hollow structure, and the two ends of the third connecting rod 141 are connected to the first connecting rod 142 and the second connecting rod 143 through screw threads. That is, the third connecting rod 141 is of a socket structure, and one end of the first connecting rod 142 and one end of the second connecting rod 143 are respectively disposed in openings on two sides of the socket structure, and are connected through the screw threads.

Alternatively, the first connecting rod 142 and the second connecting rod 143 may be of hollow structures, and the two ends of the third connecting rod 141 are connected to the first connecting rod 142 and the second connecting rod 143 through ball screws or screw nuts. That is, the first connecting rod 142 and the second connecting rod 143 are of socket structures, and the two ends of the third connecting rod 141 are respectively disposed in openings of one end of the first connecting rod 142 and one end of the second connecting rod 143.

It should be understood that, in this embodiment of this application, an example in which the third connecting rod 141 is of the hollow structure is used for description, and specific structures of the first connecting rod 142, the second connecting rod 143, and the third connecting rod are not limited.

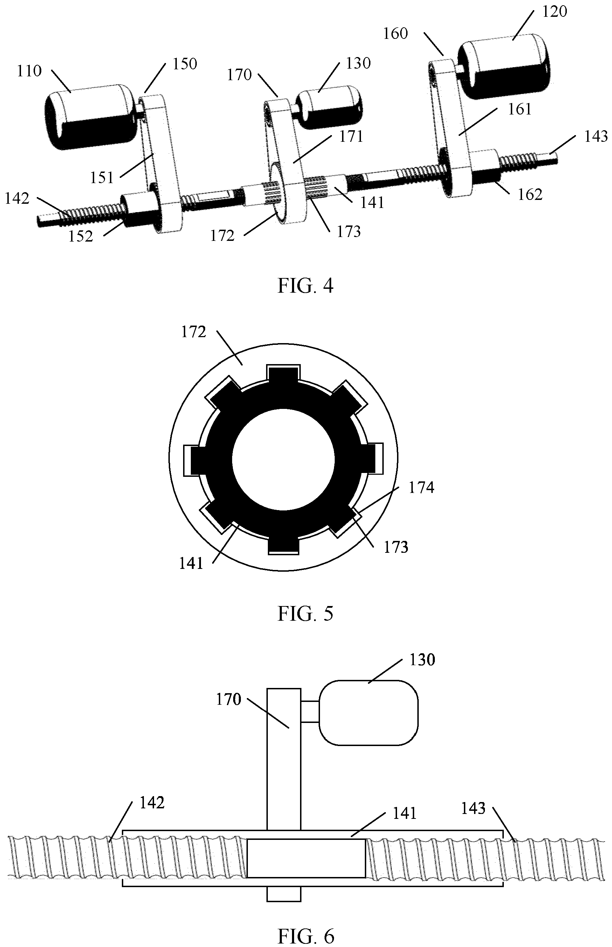

FIG. 4 is a three-dimensional schematic diagram of an independent steering mechanism according to an embodiment of this application.

Optionally, as shown in FIG. 4, the first transmission part 150 may include a first transmission belt 151 and a first gear 152. The first gear 152 has a central hole, and the first connecting rod 142 passes through the first gear 152 through the hole. When the first power-assisted motor 110 rotates, the first transmission belt 151 may drive the first gear 152 to rotate, and further drive the first connecting rod 142 to move along the axial direction of the middle tie rod 140.

Optionally, a screw thread may be disposed on a surface on which the first connecting rod 142 is in contact with the first gear 152, and an inner side (a surface on which the first gear 152 is in contact with the first connecting rod 142) of the first gear 152 may be of a screw nut or a ball screw structure. When the first power-assisted motor 110 drives the first gear 152 to rotate, the screw nut or the ball screw structure of the first gear 152 is combined with the screw thread structure of the first connecting rod 142 to drive the first connecting rod 142 to move along the axial direction of the middle tie rod 140.

Optionally, a tooth may be disposed on an outer side (a surface on which the first gear 152 is in contact with the first transmission belt 151) of the first gear 152, and may be meshed with a tooth disposed on an inner side (a surface on which the first transmission belt 151 is in contact with the first gear 152) of the first transmission belt 151, to improve power transmission efficiency.

Optionally, the second transmission part 160 may include a second transmission belt 161 and a second gear 162. The second gear 162 has a central hole, and the second connecting rod 143 passes through the second gear 162 through the hole. When the second power-assisted motor 120 rotates, the second transmission belt 161 may drive the second gear 162 to rotate, and further drive the second connecting rod 143 to move along the axial direction of the middle tie rod 140.

Optionally, a screw thread may be disposed on a surface on which the second connecting rod 143 is in contact with the second gear 162, and an inner side (a surface on which the second gear 162 is in contact with the second connecting rod 143) of the second gear 162 may be of a screw nut or a ball screw structure. When the second power-assisted motor 120 drives the second gear 162 to rotate, the screw nut or the ball screw structure of the second gear 162 is combined with the screw thread structure of the second connecting rod 143 to drive the second connecting rod 143 to move along the axial direction of the middle tie rod 140.

Optionally, a tooth may be disposed on an outer side (a surface on which the second gear 162 is in contact with the second transmission belt 161) of the second gear 162, and may be meshed with a tooth disposed on an inner side (a surface on which the second transmission belt 161 is in contact with the second gear 162) of the second transmission belt 161, to improve power transmission efficiency.

Optionally, the third transmission part 170 may include a third transmission belt 171 and a third gear 172. The third gear 172 has a central hole, and the third connecting rod 141 passes through the third gear 172 through the hole. When the third power-assisted motor 130 rotates, the third transmission belt 171 may drive the third gear 172 to rotate, and further drive the third connecting rod 141 to rotate.

Optionally, a guiding boss 173 may be disposed on a surface on which the third connecting rod 141 is in contact with the third gear 172, and a guiding groove 174 corresponding to the guiding boss 173 may be disposed on an inner side (a surface on which the third gear 172 is in contact with the third connecting rod 141) of the third gear 172, as shown in FIG. 5. The guiding boss 173 may be disposed along the axial direction of the middle tie rod 140, so that efficiency of power transmission between the third gear 172 and the third connecting rod 141 can be improved. In addition, disposing of the guiding boss 173 does not affect movement of the third connecting rod 141 along the axial direction of the middle tie rod 140.

Optionally, a tooth may be disposed on an outer side (a surface on which the third gear 172 is in contact with the third transmission belt 171) of the third gear 172, and may be meshed with a tooth disposed on an inner side (a surface on which the third transmission belt 171 is in contact with the third gear 172) of the third transmission belt 171, to improve power transmission efficiency.

Optionally, the first transmission part 150 and the second transmission part 160 may be of non-self-locking structures. The first transmission part 150 is used as an example. When the first connecting rod 142 moves, the first gear 152 may be driven to rotate. In addition, when the first gear 152 rotates, the first connecting rod 142 may be driven to move. It may also be correspondingly understood that the second transmission part 160 is of a non-self-locking structure.

It should be understood that, in this embodiment of this application, a rotational speed of the power-assisted motor is high, and the first transmission part 150, the second transmission part 160, and the third transmission part 170 are all of transmission structures of deceleration. In this embodiment of this application, an example in which the first transmission part 150, the second transmission part 160, and the third transmission part 170 are of belt transmission structures is used for description, but a structure of the transmission part is not limited. The first transmission part 150, the second transmission part 160, and the third transmission part 170 may also be of a rack-and-pinion transmission structure, or may be of a worm-and-gear transmission structure, or may be of a transmission structure of parallel shaft gears.

FIG. 6 is a cross-sectional view of a third connecting rod according to an embodiment of this application.

As shown in FIG. 6, the third connecting rod 141 may be connected to the first connecting rod 142 and the second connecting rod 143 through the screw threads.

Optionally, the screw threads disposed on the first connecting rod 142 and the second connecting rod 143 are rotated in opposite directions.

When the screw threads disposed on the first connecting rod 142 and the second connecting rod 143 are rotated in opposite directions, the third motor 130 drives, by using the third transmission part 170, the third connecting rod 141 to rotate, and the first connecting rod 142 and the second connecting rod 143 move toward or opposite to each other along the axial direction of the middle tie rod 140. For example, when the third connecting rod 141 rotates in a first direction, the first connecting rod 142 and the second connecting rod 143 may move toward each other along the axial direction of the middle tie rod 140, that is, the first connecting rod 142 and the second connecting rod 143 approach each other. When the third connecting rod 141 rotates in a second direction, the first connecting rod 142 and the second connecting rod 143 may move opposite to each other along the axial direction of the middle tie rod 140, that is, the first connecting rod 142 and the second connecting rod 143 move away from each other. The first direction is opposite to the second direction. For example, the first direction may be a clockwise direction, and the second direction may be a counterclockwise direction.

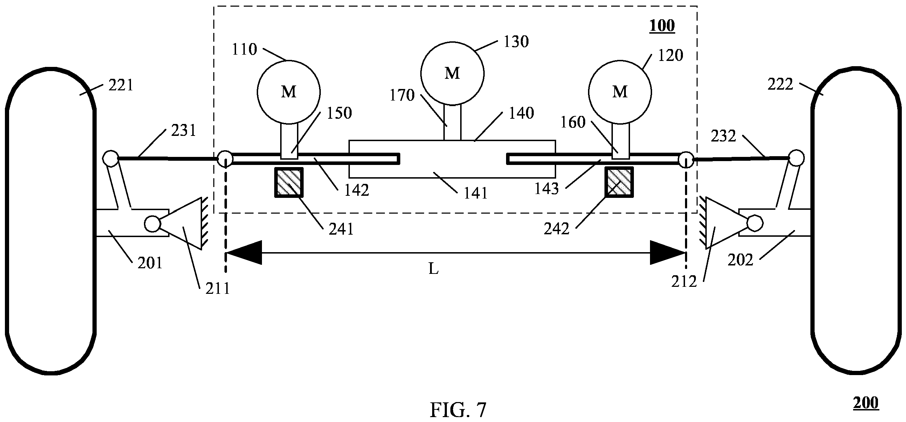

FIG. 7 is a schematic diagram of an independent steering system 200 according to an embodiment of this application. The independent steering system 200 shown in FIG. 7 may be applied to a vehicle.

As shown in FIG. 7, the independent steering system 200 may include the independent steering mechanism 100, a first steering wheel 221, and a second steering wheel 222.

The independent steering mechanism 100 may be any one of the independent steering mechanisms described in the foregoing embodiments, and may include: the first power-assisted motor 110, the second power-assisted motor 120, the third power-assisted motor 130, and the middle tie rod 140. The middle tie rod 140 includes the third connecting rod 141, the first connecting rod 142, and the second connecting rod 143.

The third power-assisted motor 130 is configured to control the third connecting rod 141 to rotate to drive the first connecting rod 142 and the second connecting rod 142 to move along the axial direction of the middle tie rod 140.

The first connecting rod 142 may be connected to the first steering wheel 221, and the first power-assisted motor 110 may be configured to control the first connecting rod 142 to move along the axial direction of the middle tie rod 140, to enable the first steering wheel 221 to rotate.

The second connecting rod 143 may be connected to the second steering wheel 222, and the second power-assisted motor 120 may be configured to control the second connecting rod 142 to move along the axial direction of the middle tie rod 140, to enable the second steering wheel 222 to rotate.

Optionally, the independent steering system 200 may include a first steering knuckle 201, a second steering knuckle 202, a first steering kingpin 211, and a second steering kingpin 212.

The first steering wheel 221 is connected to the first steering kingpin 211 through the first steering knuckle 201, and the first steering knuckle 201 is connected to the first connecting rod 142. The first power-assisted motor 110 is configured to control the first connecting rod 142 to move along the axial direction of the middle tie rod 140, to enable the first steering knuckle 201 to drive the first steering wheel 221 to rotate around the first steering kingpin 211.

The second steering wheel 222 is connected to the second steering kingpin 212 through the second steering knuckle 202, and the second steering knuckle 202 is connected to the second connecting rod 143. The second power-assisted motor 120 is configured to control the second connecting rod 143 to move along the axial direction of the middle tie rod 140, to enable the second steering knuckle 202 to drive the second steering wheel 222 to rotate around the second steering kingpin 212.

Optionally, the first steering kingpin 211 and the second steering kingpin 212 may be fastened on a chassis of the vehicle, to increase reliability when the steering wheel works.

Optionally, the independent steering system 200 may include a first tie rod 231 and a second tie rod 232. The first tie rod 231 may be configured to connect to the first connecting rod 142 and the first steering knuckle 201. The second tie rod 232 may be configured to connect to the second connecting rod 143 and the second steering knuckle 202.

Optionally, the independent steering system 200 may include a first housing 241 and a second housing 242. The first housing 241 may be configured to accommodate a part of the first transmission part 150, for example, may accommodate the first gear in the first transmission part 150, to prevent the first gear from being exposed outside. The second housing 242 may be configured to accommodate a part of the second transmission part 160. In addition, the first housing 241 and the second housing 242 may be configured to fasten the independent steering system 200 on the chassis of the vehicle, to increase reliability of using the independent steering system 200.

It should be understood that, because the first connecting rod 142 and the second connecting rod 143 are respectively connected to the first steering knuckle 201 and the second steering knuckle 202, the first connecting rod 142 and the second connecting rod 143 are configured to drive the first steering wheel 221 and the second steering wheel 222 to rotate around the first steering kingpin 211 and the second steering kingpin 212, to enable the vehicle to steer. Therefore, the first connecting rod 142 and the second connecting rod 143 can only move along the axial direction of the middle tie rod 140, and cannot rotate.

For the third connecting rod 141, the third power-assisted motor 130 may drive, by using the third transmission part 170, the third connecting rod 141 to rotate, to drive the first connecting rod 142 and the second connecting rod 143 to move toward or opposite to each other along the axial direction of the middle tie rod 140, and may control a length L of the middle tie rod 140. In addition, when only the first power-assisted motor 110 or the second power-assisted motor 120 works, the third connecting rod 141 may drive the first connecting rod 142 or the second connecting rod 143 to move. The third connecting rod 141 is used as a connecting piece between the first connecting rod 142 and the second connecting rod 143, and the third connecting rod 141 does not rotate when the connecting rod connected to only one end of the third connecting rod 141 moves. Therefore, when only the first power-assisted motor 110 or the second power-assisted motor 120 works, the third connecting rod 141 may drive the middle tie rod 140 to move along the axial direction of the middle tie rod 140. Therefore, the third connecting rod 141 may rotate, and may move along the axial direction of the middle tie rod 140.

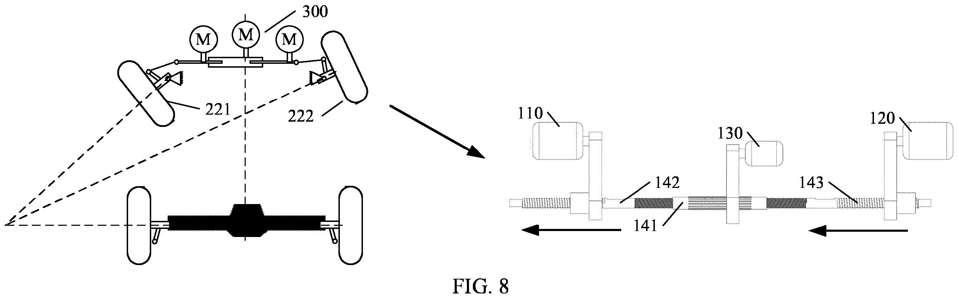

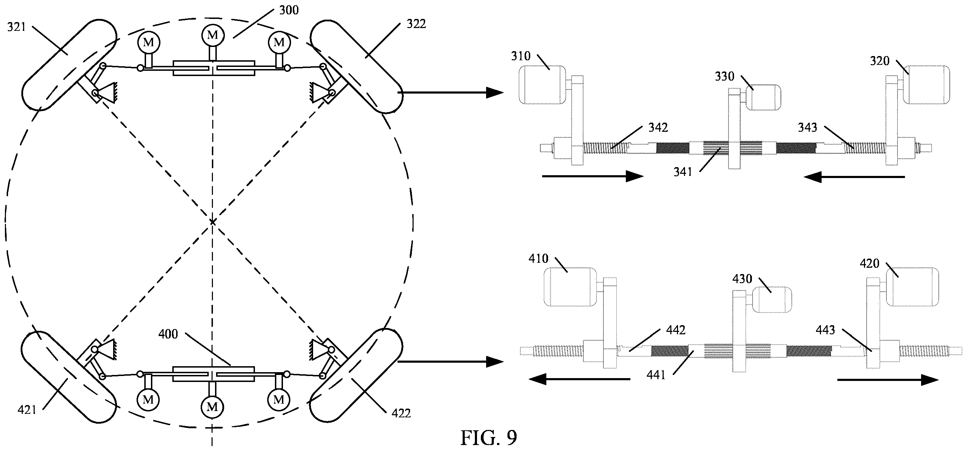

FIG. 8 and FIG. 9 are schematic diagrams of vehicle steering according to an embodiment of this application. Working states of the independent steering system provided in this application in different turning cases are shown in FIG. 8 and FIG. 9. FIG. 8 is a schematic diagram of common steering when a vehicle includes an independent steering system according to an embodiment of this application. FIG. 9 is a schematic diagram of in-situ steering when a vehicle includes two independent steering systems according to an embodiment of this application.

As shown in FIG. 8, the vehicle may include the independent steering system 200. During common steering, left steering is used as an example. During steering, a steering angle of an inner steering wheel is greater than a steering angle of an outer steering wheel. The first power-assisted motor 110 and the second power-assisted motor 120 may respectively drive the first connecting rod 142 and the second connecting rod 143 to move to the left along the axial direction of the middle tie rod 140. In this case, the third motor 130 may be in a standby state, and does not output torque. Because the screw threads through which the third connecting rod 130 is connected to the first connecting rod 142 and the second connecting rod 143 are of non-self-locking structures, the third connecting rod 130 has no constraint effect on the first connecting rod 142 and the second connecting rod 143. Therefore, steering angles of the first steering wheel 221 and the second steering wheel 222 are independently controlled, and corresponding angles may be flexibly adjusted.

It should be understood that, when the vehicle includes two independent steering systems, during the common steering, rear wheels may remain still, and the common steering may be implemented in the foregoing manner.

As shown in FIG. 9, a vehicle may include two independent steering systems. During in-situ steering, steering wheels of an independent steering system 300 need to rotate to an inner side, and steering wheels of an independent steering system 400 need to rotate to an outer side, so that a steering center of the vehicle is at a geometric center of the vehicle, and the vehicle can implement an in-situ steering function along a dashed line.

In a case in which the steering wheels of the independent steering system 300 need to rotate to the inner side, a first power-assisted motor 310 and a second power-assisted motor 320 may respectively drive a first connecting rod 342 and a second connecting rod 343 to approach each other along the axial direction of the middle tie rod 140. In this case, a third motor 330 may be in a standby state, and does not output torque.

In a case in which the steering wheels of the independent steering system 400 need to rotate to the outer side, a first power-assisted motor 410 and a second power-assisted motor 420 may respectively drive a first connecting rod 442 and a second connecting rod 443 to move away from each other along the axial direction of the middle tie rod 140. In this case, a third motor 430 may be in a standby state, and does not output torque.

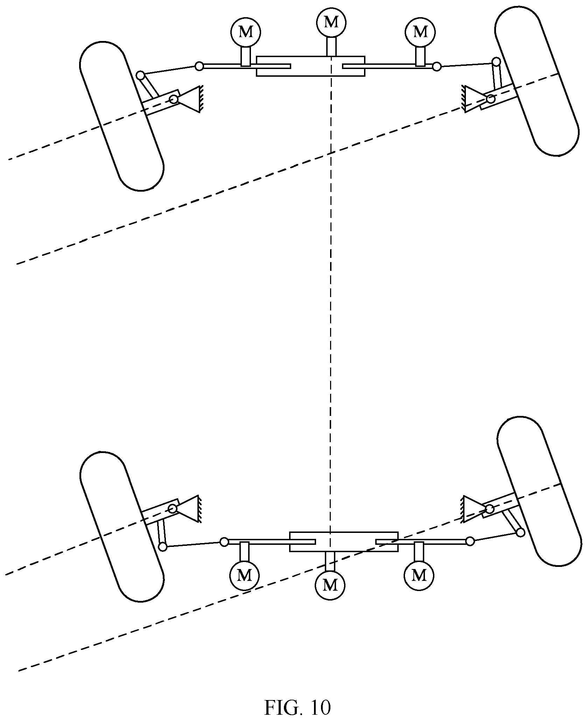

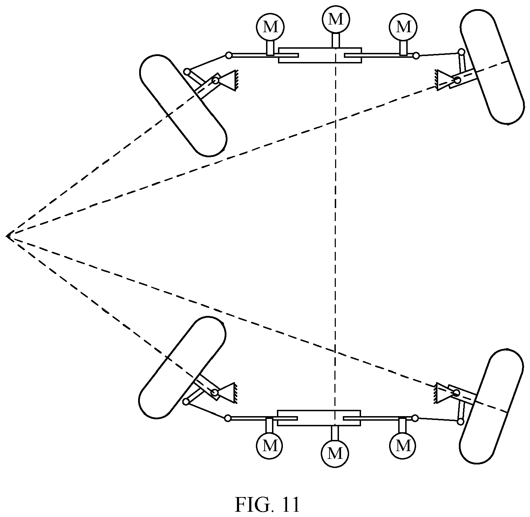

FIG. 10 and FIG. 11 are schematic diagrams of steering when a vehicle includes two independent steering systems according to an embodiment of this application. FIG. 10 is a schematic diagram of vehicle translation according to an embodiment of this application. FIG. 11 is a schematic diagram of vehicle steering with a small radius according to an embodiment of this application.

As shown in FIG. 10, during translation, steering angles of four steering wheels of a vehicle are the same. In this case, the vehicle may translate, and a steering center of the vehicle is at an infinite distance.

As shown in FIG. 11, during steering in a small radius, front side steering wheels of a vehicle are steered, rear side steering wheels on a rear side assist in the steering, and a steering angle of the rear side steering wheels is opposite to a steering angle of the front side steering wheels. In this case, a steering center of the vehicle can be very close to the vehicle body compared with the common steering, and a turning radius is greatly reduced.

It should be understood that the independent steering system provided in embodiments of this application includes the independent steering mechanism whose length is adjustable. Independent steering of two steering wheels can be implemented by controlling the first power-assisted motor, the second power-assisted motor, and the third power-assisted motor. When two independent steering systems are used, the vehicle can implement functions such as translational steering, turning radius reduction, and in-situ steering, to make driving modes more diversified.

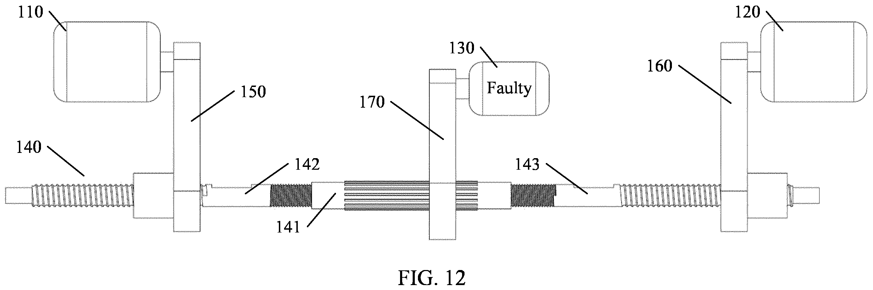

According to the independent steering system provided in embodiments of this application, when one of the power-assisted motors is faulty, the independent steering system can still implement an independent steering function without a structural adjustment. With reference to FIG. 12 to FIG. 14, the following describes a working state of the independent steering system when the power-assisted motor is faulty.

FIG. 12 is a schematic diagram corresponding to a failure of the third power-assisted motor 130 in the independent steering system. Because the screw threads through which the third connecting rod 130 is connected to the first connecting rod 142 and the second connecting rod 143 are of non-self-locking structures, and the third connecting rod 130 has no constraint effect on the first connecting rod 142 and the second connecting rod 143, when the third power-assisted motor 130 is faulty, the first power-assisted motor 110 and the second power-assisted motor 120 may independently control steering angles of corresponding steering wheels.

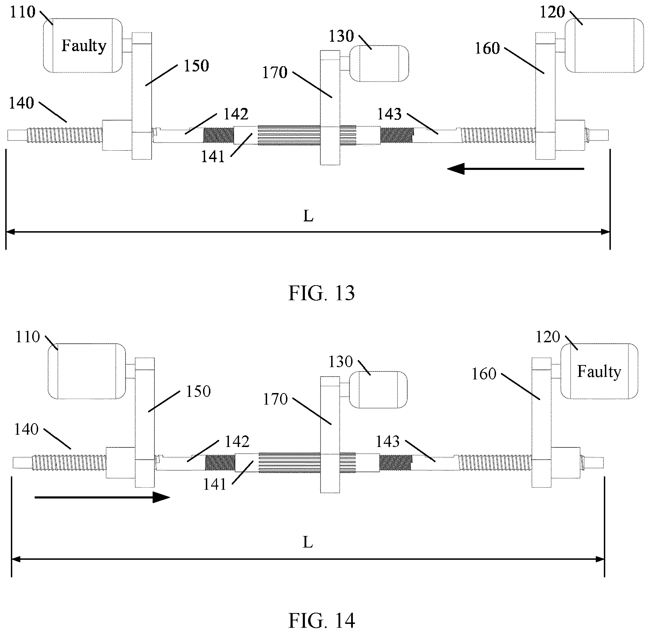

FIG. 13 is a schematic diagram corresponding to a failure of the first power-assisted motor 110 in the independent steering system. When the first power-assisted motor 110 is faulty, the third power-assisted motor 130 may control the length L of the middle tie rod 140, and the second power-assisted motor 120 drives the middle tie rod 140 to move along the axial direction of the middle tie rod 140, to implement independent steering of two steering wheels. It should be understood that, compared with working of the first power-assisted motor 110 and the second power-assisted motor 120, a 50% power-assisted capability can be provided in this case.

FIG. 14 is a schematic diagram corresponding to a failure of the second power-assisted motor 120 in the independent steering system. When the second power-assisted motor 120 is faulty, the third power-assisted motor 130 may control the length L of the middle tie rod 140, and the first power-assisted motor 110 drives the middle tie rod 140 to move along the axial direction of the middle tie rod 140, to implement independent steering of two steering wheels. It should be understood that, compared with working of the first power-assisted motor 110 and the second power-assisted motor 120, a 50% power-assisted capability can be provided in this case.

It should be understood that the independent steering system provided in this embodiment of this application can implement independent steering of two steering wheels by controlling the steering wheels by the first power-assisted motor, the second power-assisted motor, and the third power-assisted motor. In addition, a driving posture of a vehicle may be corrected by adjusting a single steering wheel, to ensure good operation stability of the vehicle. When the vehicle includes two independent steering systems, four-wheel steering can be applied to the vehicle, to implement functions such as translational steering, turning radius reduction, and in-situ steering. When any one of the power-assisted motors in the independent steering system fails, the other two power-assisted motors can still work together to implement independent steering. In addition, when the power-assisted motor fails, the independent steering system can continue to respond to a steering operation of a user without a structural adjustment, to ensure steering safety of the vehicle. The independent steering system provided in this embodiment of this application does not require components such as a clutch, and has a simpler structure.

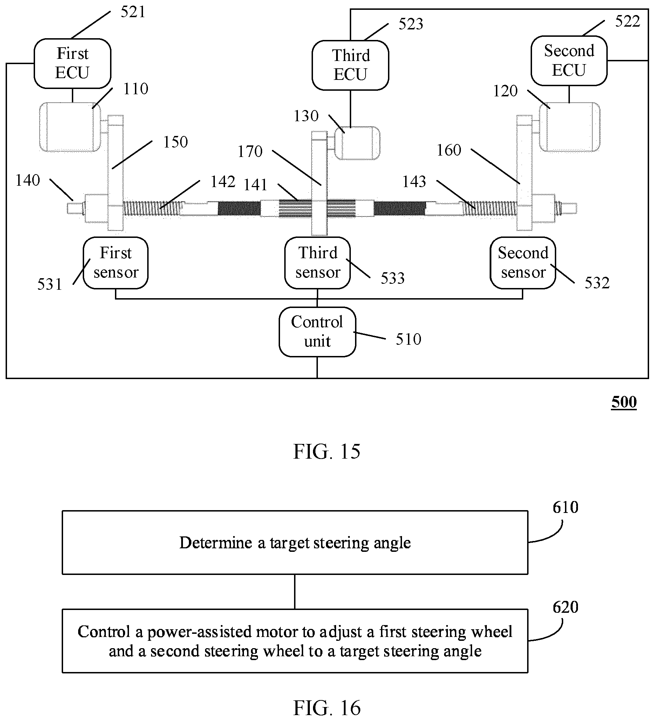

FIG. 15 is a schematic diagram of another independent steering system 500 according to an embodiment of this application. The independent steering system 500 shown in FIG. 15 may be applied to a vehicle.

As shown in FIG. 15, the independent steering system 500 may further include: a control unit 510, a first electronic control unit (electronic control unit, ECU) 521, a second ECU 522, and a third ECU 523.

The first ECU 521 may be configured to control the first power-assisted motor 110. The second ECU 522 may be configured to control the second power-assisted motor 120. The third ECU 523 may be configured to control the third power-assisted motor 130. The control unit 510 may send a corresponding first control instruction, second control instruction, and third control instruction to the first ECU 521, the second ECU 522, and the third ECU 523. The first ECU 521, the second ECU 522, and the third ECU 523 may separately control, according to the first control instruction, the second control instruction, and the third control instruction, corresponding power-assisted motors to output torque.

Optionally, the control instruction may include output torque instructions corresponding to the first power-assisted motor 110, the second power-assisted motor 120, or the third power-assisted motor 130.

Optionally, the independent steering system 500 may further include a first sensor 531, a second sensor 532, and a third sensor 533. The first sensor 531 may be configured to determine position information of the first connecting rod 142. The second sensor 532 may be configured to determine position information of the second connecting rod 143. The third sensor 533 may be configured to determine length information of the middle tie rod 140.

Optionally, the first sensor 531, the second sensor 532, and the third sensor 533 may send the determined information to the control unit 510. The control unit 510 may determine the first control instruction, the second control instruction, or the third control instruction based on current position information of the first connecting rod 142, current position information of the second connecting rod 143, and current length information of the middle tie rod 140.

Optionally, the first sensor 531 may be a translational position sensor or an angular position sensor. When the first sensor 531 is the translational position sensor, a specific position of the first connecting rod 142 may be directly measured. When the first sensor 531 is the angular position sensor, a specific position of the first connecting rod 142 may be calculated by measuring an angular position of the first power-assisted motor 110 or an angular position of the first gear in the first transmission part 150.

Optionally, the second sensor 532 may be a translational position sensor or an angular position sensor. When the second sensor 532 is the translational position sensor, a specific position of the second connecting rod 143 may be directly measured. When the second sensor 532 is the angular position sensor, a specific position of the second connecting rod 143 may be calculated by measuring an angular position of the second power-assisted motor 120 or an angular position of the second gear in the second transmission part 160.

Optionally, the third sensor 533 may be an angular sensor. The third sensor 533 may determine a length of the middle tie rod 140 by measuring a rotation angle of the third connecting rod 141. It should be understood that, because there is a non-self-locking structure between the first connecting rod 142, the second connecting rod 143, and the third connecting rod 141, when the third connecting rod 141 rotates, the first connecting rod 142 and the second connecting rod 143 approach or move away from each other along the axial direction of the middle tie rod 140, that is, the rotation angle of the third connecting rod 141 corresponds to the length of the middle tie rod 140. Therefore, the length of the middle tie rod 140 may be determined by measuring the rotation angle of the third connecting rod 141.

The independent steering mechanism and the independent steering system provided in embodiments of this application are described above with reference to FIG. 3 to FIG. 15. The following describes a control method in embodiments of this application with reference to FIG. 16 to FIG. 18. It should be noted that the control method in embodiments of this application may be applied to any apparatus described above, and this is not limited in embodiments of this application.

FIG. 16 is a flowchart of a control method according to an embodiment of this application. The method shown in FIG. 16 includes step 610 and step 620.

Step 610: Determine a target steering angle of a first steering wheel and a target steering angle of a second steering wheel.

The target steering angle of the first steering wheel and the target steering angle of the second steering wheel are calculated based on an advanced driver assistance system (advanced driver assistance system, ADAS) or a steering operation of a user.

Step 620: A control unit controls a power-assisted motor to adjust the first steering wheel and the second steering wheel to a corresponding target steering angle.

When a first power-assisted motor in an independent steering mechanism is faulty, a first working mode may be enabled. The control unit controls a third power-assisted motor to adjust a length of a middle tie rod in the independent steering mechanism, and controls a second power-assisted motor to adjust a position of the middle tie rod, so that the middle tie rod drives the first steering wheel and the second steering wheel to rotate to the corresponding target steering angle.

When the second power-assisted motor in the independent steering mechanism is faulty, a second working mode may be enabled. The control unit controls the third power-assisted motor to adjust the length of a middle tie rod in the independent steering mechanism, and controls the first power-assisted motor to adjust the position of the middle tie rod, so that the middle tie rod drives the first steering wheel and the second steering wheel to rotate to the corresponding target steering angle.

Optionally, when the first power-assisted motor and the second power-assisted motor are normal, a third working mode may be enabled. The control unit controls the first power-assisted motor and the second power-assisted motor to adjust the length of the middle tie rod and the position of the middle tie rod, so that the middle tie rod drives the first steering wheel and the second steering wheel to rotate to the corresponding target steering angle. It should be understood that because screw threads through which a third connecting rod is connected to a first connecting rod and a second connecting rod are of non-self-locking structures, the third connecting rod has no constraint effect on the first connecting rod and the second connecting rod. Therefore, that the control unit controls the first power-assisted motor and the second power-assisted motor to adjust the length of the middle tie rod, and the position of the middle tie rod may be understood as that the control unit controls the first power-assisted motor and the second power-assisted motor to adjust positions of the first connecting rod and the second connecting rod.

Optionally, the method may further include: A first ECU may send first information to the control unit, and the first information may be used to indicate whether the first power-assisted motor is faulty. A second ECU may send second information to the control unit, and the second information may be used to indicate whether the second power-assisted motor is faulty. A third ECU may send third information to the control unit, and the third information may be used to indicate whether the third power-assisted motor is faulty.

Optionally, the first information may be further used to indicate whether the first ECU is faulty. It should be understood that because the first ECU is configured to control the first power-assisted motor, when the first ECU is faulty, the first power-assisted motor cannot be controlled to output torque, and it may be considered that the first power-assisted motor is faulty.

Optionally, the second information may be further used to indicate whether the second ECU is faulty. It should be understood that, because the second ECU is configured to control the second power-assisted motor, when the second ECU is faulty, the second power-assisted motor cannot be controlled to output torque, and it may be considered that the second power-assisted motor is faulty.

Optionally, the third information may be further used to indicate whether the third ECU is faulty. It should be understood that, because the third ECU is configured to control the third power-assisted motor, when the third ECU is faulty, the third power-assisted motor cannot be controlled to output torque, and it may be considered that the third power-assisted motor is faulty.

Optionally, a first sensor may send fourth information to the control unit, and the fourth information may be used to indicate current position information of the first connecting rod. A second sensor may send fifth information to the control unit, and the fifth information may be used to indicate current position information of the second connecting rod. A third sensor may send sixth information to the control unit, and the sixth information may be used to indicate current length information of the middle tie rod.

Optionally, the fourth information may be further used to indicate whether the first sensor is faulty. It should be understood that when the first sensor is faulty, the control unit cannot determine the position information of the first connecting rod. Therefore, the control unit cannot accurately control the first power-assisted motor to output torque, and it may be considered that the first power-assisted motor is faulty.

Optionally, the fifth information may be further used to indicate whether the second sensor is faulty. It should be understood that when the second sensor is faulty, the control unit cannot determine the position information of the second connecting rod. Therefore, the control unit cannot accurately control the second power-assisted motor to output torque, and it may be considered that the second power-assisted motor is faulty.

Optionally, the sixth information may be further used to indicate whether the third sensor is faulty. It should be understood that when the third sensor is faulty, the control unit cannot determine the length information of the middle tie rod. Therefore, the control unit cannot accurately control the third power-assisted motor to output torque, and it may be considered that the third power-assisted motor is faulty.

It should be understood that, according to the control method provided in this embodiment of this application, different working modes may be selected based on an actual situation. When the three power-assisted motors work normally, two steering wheels in an independent steering system may be controlled to implement independent steering. In addition, when any one of the three power-assisted motors is faulty, independent steering can be implemented without changing a mechanical structure of the independent steering system, which is more efficient.

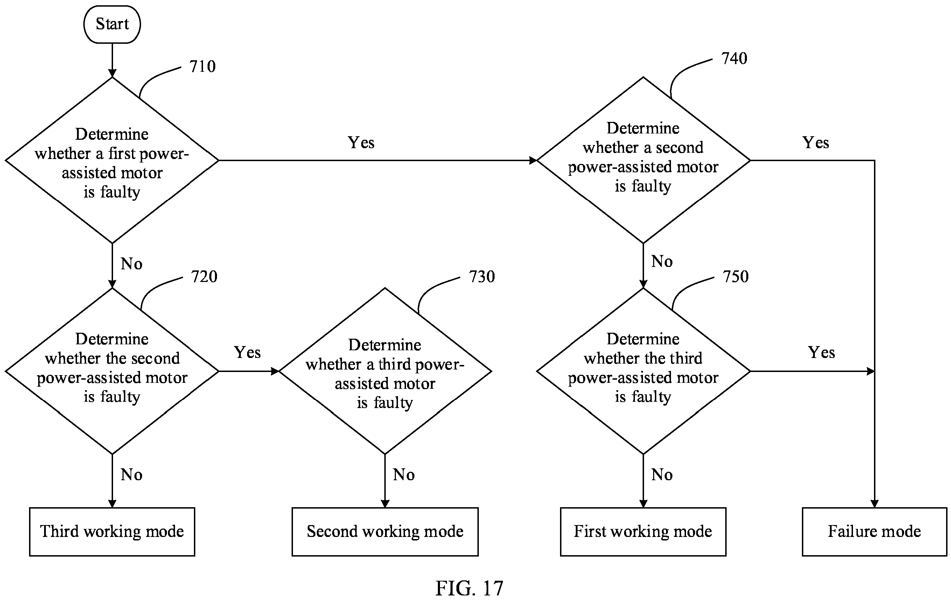

FIG. 17 is a schematic diagram of a method for determining different working modes according to an embodiment of this application.

Step 710: A control unit determines whether a first power-assisted motor is faulty.

Step 720 is performed if the first power-assisted motor is not faulty. Step 740 is performed if the first power-assisted motor is faulty.

Optionally, that the control unit determines whether the first power-assisted motor is faulty may include determining whether the first power-assisted motor, a corresponding first ECU, and a corresponding first sensor are faulty.

Optionally, the control unit may determine, based on first information sent by the first ECU, whether the first power-assisted motor and the first ECU are faulty.

Optionally, the control unit may determine, based on fourth information sent by the first sensor, whether the first sensor is faulty.

Step 720: The control unit determines whether a second power-assisted motor is faulty.

If the second power-assisted motor is not faulty, the control unit determines that a current working mode is a third working mode. Step 730 is performed if the second power-assisted motor is faulty.

Optionally, that the control unit determines whether the second power-assisted motor is faulty may include determining whether the second power-assisted motor, a corresponding second ECU, and a corresponding second sensor are faulty.

Optionally, the control unit may determine, based on second information sent by the second ECU, whether the second power-assisted motor and the second ECU are faulty.

Optionally, the control unit may determine, based on fifth information sent by the second sensor, whether the second sensor is faulty.

Step 730: The control unit determines whether a third power-assisted motor is faulty.

If the third power-assisted motor is not faulty, the control unit determines that a current working mode is a second working mode. If the third power-assisted motor is faulty, the control unit determines that a current working mode is a failure mode, that is, two of the three power-assisted motors are faulty and cannot perform steering.

Optionally, that the control unit determines whether the third power-assisted motor is faulty may include determining whether the third power-assisted motor, a corresponding third ECU, and a corresponding third sensor are faulty.

Optionally, the control unit may determine, based on third information sent by the third ECU, whether the third power-assisted motor and the third ECU are faulty.

Optionally, the control unit may determine, based on sixth information sent by the third sensor, whether the third sensor is faulty.

Step 740: The control unit determines whether the second power-assisted motor is faulty.

Step 750 is performed if the second power-assisted motor is not faulty. If the second power-assisted motor is faulty, the control unit determines that a current working mode is a failure mode.

Step 750: The control unit determines whether the third power-assisted motor is faulty.

If the third power-assisted motor is not faulty, the control unit determines that a current working mode is a first working mode. If the third power-assisted motor is faulty, the control unit determines that a current working mode is a failure mode.

Table 1 shows a correspondence between each working mode and a working state of each power-assisted motor.

**Table 1**

|  | First power-assisted motor | Second power-assisted motor | Third power-assisted motor |
|---|---|---|---|
| First working mode | × | √ | √ |
| Second working mode | √ | × | √ |
| Third working mode | √ | √ | / |
| Failure mode | × | × | / |
|  | × | / | × |
|  | / | × | × |

√ indicates that the power-assisted motor works properly, × indicates that the power-assisted motor is faulty, and / indicates that the power-assisted motor is in any state.

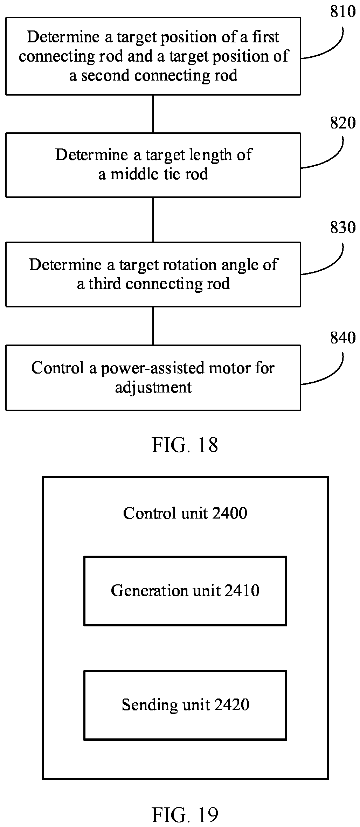

FIG. 18 is a schematic flowchart of controlling a power-assisted motor by a control unit according to an embodiment of this application.

Step 810: Determine a target position of a first connecting rod and a target position of a second connecting rod.

A control unit determines the target position of the first connecting rod and the target position of the second connecting rod based on a target steering angle of a first steering wheel and a target steering angle of a second steering wheel, that is, when the first connecting rod and the second connecting rod are in target positions, the first steering wheel and the second steering wheel may reach target steering angles, so that a vehicle completes steering.

Step 820: Determine a target length of a middle tie rod.

The control unit determines the target length of the middle tie rod based on the target position of the first connecting rod and the target position of the second connecting rod.

Step 830: Determine a target rotation angle of a third connecting rod.

The control unit may calculate the target rotation angle of the third connecting rod based on the target length of the middle tie rod. Because the third connecting rod is connected to the first connecting rod and the second connecting rod through screw threads, when the third connecting rod rotates, the first connecting rod and the second connecting rod approach or move away from each other along an axial direction of the middle tie rod, to adjust a length of the middle tie rod.

The target rotation angle satisfies the following formula:

$$\theta = \frac{L - L_0}{2i_{ang}},$$

where

L is the target length of the middle tie rod, $L_0$ is a shortest length of the middle tie rod, and $i_{ang}$ is a lead of the screw thread.

Step 840: Control a power-assisted motor for adjustment.

When an independent steering system works in a first working mode, the control unit controls, based on the target rotation angle, a third power-assisted motor to adjust the length of the middle tie rod to the target length, and controls, based on the target position of the first connecting rod and the target position of the second connecting rod, a second power-assisted motor to adjust the first connecting rod and the second connecting rod to a corresponding target position.

When the independent steering system works in a second working mode, the control unit controls, based on the target rotation angle, the third power-assisted motor to adjust the length of the middle tie rod to the target length, and controls, based on the target position of the first connecting rod and the target position of the second connecting rod, a first power-assisted motor to adjust the first connecting rod and the second connecting rod to a corresponding target position.

Optionally, the control unit may send a third control instruction to a third ECU, and the third control instruction is used to indicate the third ECU to control the third power-assisted motor to output torque, so that the length of the middle tie rod is the target length. The third ECU may control the third power-assisted motor according to the third control instruction.

Optionally, the control unit may obtain a current length of the middle tie rod based on sixth information sent by a third sensor, and determine the third control instruction based on the current length and the target length of the middle tie rod.

Optionally, when the independent steering system works in the second working mode, the control unit may send a first control instruction to a first ECU, and the first control instruction is used to indicate the first ECU to control the first power-assisted motor to output torque, so that the first connecting rod and the second connecting rod reach the corresponding target position. The first ECU may control the first power-assisted motor according to the first control instruction.

Optionally, the control unit may obtain a current length of the middle tie rod based on fourth information sent by a first sensor, and determine a fourth control instruction based on the current length and the target length of the middle tie rod.

Optionally, when the independent steering system works in the first working mode, the control unit may send a second control instruction to a second ECU, and the second control instruction is used to indicate the second ECU to control the second power-assisted motor to output torque, so that the first connecting rod and the second connecting rod reach the corresponding target position. The second ECU may control the second power-assisted motor according to the second control instruction.

Optionally, the control unit may obtain a current length of the middle tie rod based on fifth information sent by a second sensor, and determine the second control instruction based on the current length and the target length of the middle tie rod.

It should be understood that the foregoing step 810 to step 840 are processes corresponding to the first working mode and the second working mode. Because screw threads through which the third connecting rod is connected to the first connecting rod and the second connecting rod are of non-self-locking structures, the third connecting rod has no constraint effect on the first connecting rod and the second connecting rod. Therefore, when the control unit determines that a working mode is a third working mode, the control unit may control the first power-assisted motor and the second power-assisted motor to adjust the first connecting rod and the second connecting rod to a corresponding target position, that is, only step 810 and step 840 are required to complete a process of controlling the power-assisted motor.

Optionally, when the independent steering system works in the third working mode, the control unit may send a first control instruction to a first ECU, and the first control instruction is used to indicate the first ECU to control the first power-assisted motor to output torque, so that the first connecting rod reaches the target position. The first ECU may control the first power-assisted motor according to the first control instruction. The control unit may send a second control instruction to a second ECU, and the second control instruction is used to indicate the second ECU to control the second power-assisted motor to output torque, so that the second connecting rod reaches the target position. The second ECU may control the second power-assisted motor according to the second control instruction.

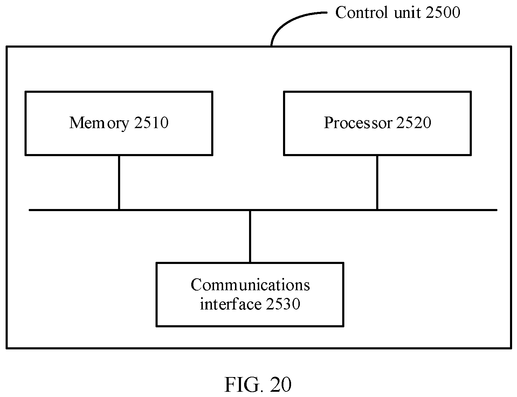

The foregoing describes the control method provided in embodiments of this application with reference to FIG. 16 to FIG. 18. The following describes, with reference to FIG. 19 and FIG. 20, a control unit that performs the foregoing control method. It should be noted that the apparatus in this embodiment of this application may be applied to any independent steering mechanism or independent steering system described above, to implement any control method described above. For brevity, details are not described herein again.

FIG 19 is a schematic diagram of a control apparatus according to an embodiment of this application. A control apparatus 2400 shown in FIG. 19 includes a generation unit 2410 and a sending unit 2420.

The generation unit 2410 is configured to generate a control instruction, and the control instruction is used to control a power-assisted motor.

The sending unit 2420 is configured to send the control instruction to an ECU corresponding to the power-assisted motor, and control the ECU to drive the corresponding power-assisted motor to output torque, to implement independent steering.

In an optional embodiment, the generation unit 2410 may be a processor 2520, the sending unit 2420 may be a communications interface 2530, and a specific structure of the control unit is shown in FIG. 20.

FIG. 20 is a schematic block diagram of a control unit according to another embodiment of this application. A control unit 2500 shown in FIG. 20 may include a memory 2510, a processor 2520, and a communications interface 2530. The memory 2510, the processor 2520, and the communications interface 2530 are connected through an internal connection path. The memory 2510 is configured to store instructions. The processor 2520 is configured to execute the instructions stored in the memory 2520, to control the communications interface 2530 to receive/send information. Optionally, the memory 2510 may be coupled to the processor 2520 through an interface, or may be integrated with the processor 2520.

It should be noted that the communications interface 2530 uses an apparatus such as but not limited to an input/output interface (input/output interface), to implement communication between the controller 2500 and another device or a communication network.

In an implementation process, the steps in the foregoing method may be performed by using a hardware integrated logical circuit in the processor 2520, or by using instructions in a form of software. The method disclosed with reference to embodiments of this application may be directly performed by a hardware processor, or may be performed by using a combination of hardware in the processor and a software module. The software module may be located in a mature storage medium in the field, such as a random access memory, a flash memory, a read-only memory, a programmable read-only memory, an electrically erasable programmable memory, or a register. The storage medium is located in the memory 2510, and the processor 2520 reads information in the memory 2510 and completes the steps in the foregoing method in combination with hardware of the processor 2520. To avoid repetition, details are not described herein again.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that units and algorithm steps described with reference to embodiments disclosed in this specification can be implemented by electronic hardware, or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An independent steering mechanism (100), comprising:

   a first power-assisted motor (110), a second power-assisted motor (120), a third power-assisted motor (130), and a middle tie rod (140), wherein
   the middle tie rod (140) comprises a first connecting rod (142), a second connecting rod (143), and a third connecting rod (141);
   two ends of the third connecting rod (141) are connected to the first connecting rod (142) and the second connecting rod (143);
   the first power-assisted motor (110) is configured to control the first connecting rod (142) to move along an axial direction of the middle tie rod (140);
   the second power-assisted motor (120) is configured to control the second connecting rod (143) to move along the axial direction of the middle tie rod (140); and
   the third power-assisted motor (130) is configured to control the third connecting rod (141) to rotate, to drive the first connecting rod (142) and the second connecting rod (143) to approach or move away from each other along the axial direction of the middle tie rod (140).

2. The independent steering mechanism (100) according to claim 1, wherein the third connecting rod (141) is of a hollow structure, and the two ends of the third connecting rod (141) are connected to the first connecting rod (142) and the second connecting rod (143) through screw threads.

3. The independent steering mechanism (100) according to claim 2, wherein the screw threads at the two ends of the third connecting rod (141) are rotated in opposite directions.

4. The independent steering mechanism (100) according to any one of claims 1 to 3, wherein the independent steering mechanism (100) further comprises:

   a first transmission part (150), a second transmission part (160), and a third transmission part (170), wherein
   the first power-assisted motor (110) controls, by using the first transmission part (150), the first connecting rod (142) to move along the axial direction of the middle tie rod (140);
   the second power-assisted motor (120) controls, by using the second transmission part (160), the second connecting rod (143) to move along the axial direction of the middle tie rod (140); and
the third power-assisted motor (130) controls, by using the third transmission part (170), the third connecting rod (141) to rotate.

5. The independent steering mechanism (100) according to claim 4, wherein

the first transmission part (150) comprises a first gear (152);
the first gear (152) is connected to the first connecting rod (142) through a screw thread; and
the first power-assisted motor (110) drives the first gear (152) to rotate, to control the first connecting rod (142) to move along the axial direction of the middle tie rod (140).

6. The independent steering mechanism (100) according to claim 4 or 5, wherein

the second transmission part (160) comprises a second gear (162);
the second gear (162) is connected to the second connecting rod (143) through a screw thread; and
the second power-assisted motor (120) drives the second gear (162) to rotate, to control the second connecting rod (143) to move along the axial direction of the middle tie rod (140).

7. The independent steering mechanism (100) according to any one of claims 4 to 6, wherein

the third transmission part (170) comprises a third gear (172);
a guiding boss (173) disposed along the axial direction of the middle tie rod (140) is disposed on a surface of the third connecting rod (141);
a guiding groove (174) corresponding to the guiding boss (173) is disposed on the third gear (172);
the third gear (172) is connected to the third connecting rod (141) through the guiding groove (174) and the guiding boss (173); and
the third power-assisted motor (130) drives the third gear (172) to rotate, to control the third connecting rod (141) to rotate.

8. An independent steering system (200, 500), comprising:

a first steering wheel (221), a second steering wheel (222), and the independent steering mechanism (100) according to any one of claims 1 to 7, wherein
the first connecting rod (142) in the independent steering mechanism (100) is connected to the first steering wheel (221);
the second connecting rod (143) in the independent steering mechanism (100) is connected to the second steering wheel (222);
the first power-assisted motor (110) in the independent steering mechanism (100) is configured to control the first connecting rod (142) to move along the axial direction of the middle tie rod (140) in the independent steering mechanism (100), to enable the first steering wheel (221) to rotate; and
the second power-assisted motor (120) in the independent steering mechanism (100) is configured to control the second connecting rod (143) to move along the axial direction of the middle tie rod (140) in the independent steering mechanism (100), to enable the second steering wheel (222) to rotate.

9. The independent steering system (200, 500) according to claim 8, wherein the independent steering system (200, 500) further comprises a first steering knuckle (201), a second steering knuckle (202), a first steering kingpin (211), and a second steering kingpin (212), wherein

the first steering wheel (221) is connected to the first steering kingpin (211) through the first steering knuckle (201), and the first steering knuckle (201) is connected to the first connecting rod (142);
the first power-assisted motor (110) is configured to control the first connecting rod (142) to move along the axial direction of the middle tie rod (140), to enable the first steering knuckle (201) to drive the first steering wheel (221) to rotate around the first steering kingpin (211);
the second steering wheel (222) is connected to the second steering kingpin (212) through the second steering knuckle (202), and the second steering knuckle (202) is connected to the second connecting rod (143); and
the second power-assisted motor (120) is configured to control the second connecting rod (143) to move along the axial direction of the middle tie rod (140), to enable the second steering knuckle (202) to drive the second steering wheel (222) to rotate around the second steering kingpin (212).

10. The independent steering system (200) according to claim 8 or 9, wherein the independent steering system (200, 500) further comprises:

a first tie rod (231) and a second tie rod (232), wherein
one end of the first tie rod (231) is connected to the first connecting rod (142), and the other end of the first tie rod (231) is connected to the first steering knuckle (201); and
one end of the second tie rod (232) is connected to the second connecting rod (143), and the other end of the second tie rod (232) is connected to the second steering knuckle (202).

11. A control method for an independent steering system (200, 500), wherein the independent steering system (200, 500) comprises a control unit (510), a first steering wheel (221), a second steering wheel (222), and the independent steering mechanism (100) according to any one of claims 1 to 7, wherein the first steering wheel (211) and the second steering wheel (222) are respectively connected to the first connecting rod (142) and the second connecting rod (143) of the middle tie rod (140) in the independent steering mechanism (100); and
the method comprises:

determining, by the control unit (510), a target steering angle of the first steering wheel (211) and a target steering angle of the second steering wheel (222); and
when the first power-assisted motor (110) or the second power-assisted motor (120) in the independent steering mechanism (100) is faulty, controlling, by the control unit (510), the third power-assisted motor (130) in the independent steering mechanism (100) to adjust a length of the middle tie rod (140) in the independent steering mechanism (100); and controlling a normal power-assisted motor in the first power-assisted motor (110) or the second power-assisted motor (120) to adjust a position of the middle tie rod (140), so that the middle tie rod (140) drives the first steering wheel (221) and the second steering wheel (222) to rotate to a corresponding target steering angle.

12. The method according to claim 11, wherein the method further comprises:
when the first power-assisted motor (110) and the second power-assisted motor (120) are normal, controlling, by the control unit (510), the first power-assisted motor (110) and the second power-assisted motor (120) to adjust the length of the middle tie rod (140) and the position of the middle tie rod (140), so that the middle tie rod (140) drives the first steering wheel (221) and the second steering wheel (222) to rotate to the corresponding target steering angle.

13. The method according to claim 11 or 12, wherein the independent steering system (500) comprises a first ECU (521), a second ECU (522), and a third ECU (523), wherein the first ECU (521) is configured to control the first power-assisted motor (110), the second ECU (522) is configured to control the second power-assisted motor (120), and the third ECU (523) is configured to control the third power-assisted motor (130); and
the method further comprises:

receiving, by the control unit (510), first information sent by the first ECU (521), wherein the first information is used to indicate whether the first power-assisted motor (110) is faulty;
receiving, by the control unit (510), second information sent by the second ECU (522), wherein the second information is used to indicate whether the second power-assisted motor (120) is faulty; and
receiving, by the control unit (510), third information sent by the third ECU (523), wherein the third information is used to indicate whether the third power-assisted motor (130) is faulty.

14. The method according to claim 13, wherein the controlling, by the control unit (510), the third power-assisted motor (130) in the independent steering mechanism (100) to adjust a length of the middle tie rod (140) in the independent steering mechanism (100); and controlling a normal power-assisted motor in the first power-assisted motor (110) or the second power-assisted motor (120) to adjust a position of the middle tie rod (140) comprises:

determining, by the control unit (510), a target position of the first connecting rod (142) and a target position of the second connecting rod (143) based on the target steering angle of the first steering wheel (221) and the target steering angle of the second steering wheel (222);
determining, by the control unit (510), a target length of the middle tie rod (140) based on the target position of the first connecting rod (142) and the target position of the second connecting rod (143);
calculating, by the control unit (510), a target rotation angle of the third connecting rod (141) in the independent steering mechanism (100) based on the target length; and
controlling, by the control unit (510) based on the target rotation angle, the third power-assisted motor (130) to adjust the length of the middle tie rod (140) to the target length, and controlling, based on the target position of the first connecting rod (142) and the target position of the second connecting rod (143), the normal power-assisted motor in the first power-assisted motor (110) or the second power-assisted motor (120) to adjust the first connecting rod (142) and the second connecting rod (143) to a corresponding target position.

**15.** The method according to claim 14, wherein

the two ends of the third connecting rod (141) are connected to the first connecting rod (142) and the second connecting rod (143) through the screw threads; and
the target rotation angle satisfies the following formula:

$$\theta = \frac{L - L_0}{2i_{ang}},$$

wherein
L is the target length of the middle tie rod (140), $L_0$ is a shortest length of the middle tie rod (140), and $i_{ang}$ is a lead of the screw thread.

**Patentansprüche**

**1.** Unabhängiger Lenkmechanismus (100), umfassend:

einen ersten Servomotor (110), einen zweiten Servomotor (120), einen dritten Servomotor (130) und eine mittlere Spurstange (140), wobei
die mittlere Spurstange (140) eine erste Verbindungsstange (142), eine zweite Verbindungsstange (143) und eine dritte Verbindungsstange (141) umfasst;
zwei Enden der dritten Verbindungsstange (141) mit der ersten Verbindungsstange (142) und der zweiten Verbindungsstange (143) verbunden sind;
der erste Servomotor (110) dazu konfiguriert ist, die erste Verbindungsstange (142) zu steuern, um sich entlang einer axialen Richtung der mittleren Spurstange (140) zu bewegen;
der zweite Servomotor (120) dazu konfiguriert ist, die zweite Verbindungsstange (143) zu steuern, um sich entlang der axialen Richtung der mittleren Spurstange (140) zu bewegen; und
der dritte Servomotor (130) dazu konfiguriert ist, die dritte Verbindungsstange (141) zu drehen, um die erste Verbindungsstange (142) und die zweite Verbindungsstange (143) dazu anzutreiben, sich entlang der axialen Richtung der mittleren Spurstange (140) einander zu nähern oder voneinander weg zu bewegen.

**2.** Unabhängiger Lenkmechanismus (100) nach Anspruch 1, wobei die dritte Verbindungsstange (141) eine hohle Struktur aufweist und die zwei Enden der dritten Verbindungsstange (141) mit der ersten Verbindungsstange (142) und der zweiten Verbindungsstange (143) durch Schraubgewinde verbunden sind.

**3.** Unabhängiger Lenkmechanismus (100) nach Anspruch 2, wobei die Schraubgewinde an den zwei Enden der dritten Verbindungsstange (141) in entgegengesetzte Richtungen gedreht werden.

**4.** Unabhängiger Lenkmechanismus (100) nach einem der Ansprüche 1 bis 3, wobei der unabhängige Lenkmechanismus (100) ferner Folgendes umfasst:

ein erstes Getriebeteil (150), ein zweites Getriebeteil (160) und ein drittes Getriebeteil (170), wobei
der erste Servomotor (110) unter Verwendung des ersten Getriebeteils (150) die erste Verbindungsstange (142) steuert, um sich entlang der axialen Richtung der mittleren Spurstange (140) zu bewegen;
der zweite Servomotor (120) unter Verwendung des zweiten Getriebeteils (160) die zweite Verbindungsstange (143) steuert, um sich entlang der axialen Richtung der mittleren Spurstange (140) zu bewegen; und
der dritte Servomotor (130) unter Verwendung des dritten Getriebeteils (170) die dritte Verbindungsstange (141) steuert, um sich zu drehen.

**5.** Unabhängiger Lenkmechanismus (100) nach Anspruch 4, wobei

das erste Getriebeteil (150) ein erstes Zahnrad (152) umfasst;

das erste Zahnrad (152) mit der ersten Verbindungsstange (142) über ein Schraubgewinde verbunden ist; und

der erste Servomotor (110) das erste Zahnrad (152) dazu antreibt, sich zu drehen, um die erste Verbindungsstange (142) zu steuern, um sich entlang der axialen Richtung der mittleren Spurstange (140) zu bewegen.

6. Unabhängiger Lenkmechanismus (100) nach Anspruch 4 oder 5, wobei

das zweite Getriebeteil (160) ein zweites Zahnrad (162) umfasst; das zweite Zahnrad (162) mit der zweiten Verbindungsstange (143) über ein Schraubgewinde verbunden ist; und

der zweite Servomotor (120) das zweite Zahnrad (162) dazu antreibt, sich zu drehen, um die zweite Verbindungsstange (143) zu steuern, um sich entlang der axialen Richtung der mittleren Spurstange (140) zu bewegen.

7. Unabhängiger Lenkmechanismus (100) nach einem der Ansprüche 4 bis 6, wobei

das dritte Getriebeteil (170) ein drittes Zahnrad (172) umfasst; eine Führungsnabe (173), die entlang der axialen Richtung der mittleren Spurstange (140) angeordnet ist, auf einer Oberfläche der dritten Verbindungsstange (141) angeordnet ist;

eine Führungsnut (174), die der Führungsnabe (173) entspricht, auf dem dritten Zahnrad (172) angeordnet ist;

das dritte Zahnrad (172) über die Führungsnut (174) und die Führungsnabe (173) mit der dritten Verbindungsstange (141) verbunden ist; und

der dritte Servomotor (130) das dritte Zahnrad (172) dazu antreibt, sich zu drehen, um die dritte Verbindungsstange (141) zu steuern, um sich zu drehen.

8. Unabhängiges Lenksystem (200, 500), umfassend:

ein erstes Lenkrad (221), ein zweites Lenkrad (222) und den unabhängigen Lenkmechanismus (100) nach einem der Ansprüche 1 bis 7, wobei

die erste Verbindungsstange (142) in dem unabhängigen Lenkmechanismus (100) mit dem ersten Lenkrad (221) verbunden ist;

die zweite Verbindungsstange (143) in dem unabhängigen Lenkmechanismus (100) mit dem zweiten Lenkrad (222) verbunden ist;

der erste Servomotor (110) in dem unabhängigen Lenkmechanismus (100) dazu konfiguriert ist, die erste Verbindungsstange (142) zu steuern, um sich entlang der axialen Richtung der mittleren Spurstange (140) in dem unabhängigen Lenkmechanismus (100) zu bewegen, um es dem ersten Lenkrad (221) zu ermöglichen, sich zu drehen; und

der zweite Servomotor (120) in dem unabhängigen Lenkmechanismus (100) dazu konfiguriert ist, die zweite Verbindungsstange (143) zu steuern, um sich entlang der axialen Richtung der mittleren Spurstange (140) in dem unabhängigen Lenkmechanismus (100) zu bewegen, um es dem zweiten Lenkrad (222) zu ermöglichen, sich zu drehen.

9. Unabhängiges Lenksystem (200, 500) nach Anspruch 8, wobei das unabhängige Lenksystem (200, 500) ferner einen ersten Lenkachsschenkel (201), einen zweiten Lenkachsschenkel (202), einen ersten Lenkzapfen (211) und einen zweiten Lenkzapfen (212) umfasst, wobei

das erste Lenkrad (221) über den ersten Lenkachsschenkel (201) mit dem ersten Lenkzapfen (211) verbunden ist und der erste Lenkachsschenkel (201) mit der ersten Verbindungsstange (142) verbunden ist;

der erste Servomotor (110) dazu konfiguriert ist, die erste Verbindungsstange (142) zu steuern, um sich entlang der axialen Richtung der mittleren Spurstange (140) zu bewegen, um es dem ersten Lenkachsschenkel (201) zu ermöglichen, das erste Lenkrad (221) dazu anzutreiben, sich um den ersten Lenkzapfen (211) zu drehen;

das zweite Lenkrad (222) über den zweiten Lenkachsschenkel (202) mit dem zweiten Lenkzapfen (212) verbunden ist und der zweite Lenkachsschenkel (202) mit der zweiten Verbindungsstange (143) verbunden ist; und

der zweite Servomotor (120) dazu konfiguriert ist, die zweite Verbindungsstange (143) zu steuern, um sich entlang der axialen Richtung der mittleren Spurstange (140) zu bewegen, um es dem zweiten Lenkachsschenkel (202) zu ermöglichen, das zweite Lenkrad (222) dazu anzutreiben, sich um den zweiten Lenkzapfen (212) zu drehen.

**10.** Unabhängiges Lenksystem (200) nach Anspruch 8 oder 9, wobei das unabhängige Lenksystem (200, 500) ferner Folgendes umfasst:

eine erste Spurstange (231) und eine zweite Spurstange (232), wobei
ein Ende der ersten Spurstange (231) mit der ersten Verbindungsstange (142) verbunden ist und das andere Ende der ersten Spurstange (231) mit dem ersten Lenkachsschenkel (201) verbunden ist; und
ein Ende der zweiten Spurstange (232) mit der zweiten Verbindungsstange (143) verbunden ist und das andere Ende der zweiten Spurstange (232) mit dem zweiten Lenkachsschenkel (202) verbunden ist.

**11.** Steuerverfahren für ein unabhängiges Lenksystem (200, 500), wobei das unabhängige Lenksystem (200, 500) eine Steuereinheit (510), ein erstes Lenkrad (221), ein zweites Lenkrad (222) und den unabhängigen Lenkmechanismus (100) nach einem der Ansprüche 1 bis 7 umfasst, wobei das erste Lenkrad (211) und das zweite Lenkrad (222) jeweils mit der ersten Verbindungsstange (142) und der zweiten Verbindungsstange (143) der mittleren Spurstange (140) in dem unabhängigen Lenkmechanismus (100) verbunden sind; und
das Verfahren Folgendes umfasst:

Bestimmen, durch die Steuereinheit (510), eines Ziellenkwinkels des ersten Lenkrads (211) und eines Ziellenkwinkels des zweiten Lenkrads (222); und
wenn der erste Servomotor (110) oder der zweite Servomotor (120) in dem unabhängigen Lenkmechanismus (100) fehlerhaft ist, Steuern, durch die Steuereinheit (510), des dritten Servomotors (130) in dem unabhängigen Lenkmechanismus (100), um eine Länge der mittleren Spurstange (140) in dem unabhängigen Lenkmechanismus (100) anzupassen; und Steuern eines normalen Servomotors in dem ersten Servomotor (110) oder dem zweiten Servomotor (120), um eine Position der mittleren Spurstange (140) anzupassen, sodass die mittlere Spurstange (140) das erste Lenkrad (221) und das zweite Lenkrad (222) dazu antreibt, sich mit einem entsprechenden Ziellenkwinkel zu drehen.

**12.** Verfahren nach Anspruch 11, wobei das Verfahren ferner Folgendes umfasst:
wenn der erste Servomotor (110) und der zweite Servomotor (120) normal sind, Steuern, durch die Steuereinheit (510), des ersten Servomotors (110) und des zweiten Servomotors (120), um die Länge der mittleren Spurstange (140) und die Position der mittleren Spurstange (140) anzupassen, sodass die mittlere Spurstange (140) das erste Lenkrad (221) und das zweite Lenkrad (222) dazu antreibt, sich mit dem entsprechenden Ziellenkwinkel zu drehen.

**13.** Verfahren nach Anspruch 11 oder 12, wobei das unabhängige Lenksystem (500) eine erste ECU (521), eine zweite ECU (522) und eine dritte ECU (523) umfasst, wobei die erste ECU (521) dazu konfiguriert ist, den ersten Servomotor (110) zu steuern, die zweite ECU (522) dazu konfiguriert ist, den zweiten Servomotor (120) zu steuern, und die dritte ECU (523) dazu konfiguriert ist, den dritten Servomotor (130) zu steuern; und
das Verfahren ferner Folgendes umfasst:

Empfangen, durch die Steuereinheit (510), erster Informationen, die durch die erste ECU (521) gesendet werden, wobei die ersten Informationen dazu verwendet werden, anzugeben, ob der erste Servomotor (110) fehlerhaft ist;
Empfangen, durch die Steuereinheit (510), zweiter Informationen, die durch die zweite ECU (522) gesendet werden, wobei die zweiten Informationen dazu verwendet werden, anzugeben, ob der zweite Servomotor (120) fehlerhaft ist; und
Empfangen, durch die Steuereinheit (510), dritter Informationen, die durch die dritte ECU (523) gesendet werden, wobei die dritten Informationen dazu verwendet werden, anzugeben, ob der dritte Servomotor (130) fehlerhaft ist.

**14.** Verfahren nach Anspruch 13, wobei das Steuern, durch die Steuereinheit (510), des dritten Servomotors (130) in dem unabhängigen Lenkmechanismus (100), um eine Länge der mittleren Spurstange (140) in dem unabhängigen Lenkmechanismus (100) anzupassen; und Steuern eines normalen Servomotors in dem ersten Servomotor (110) oder dem zweiten Servomotor (120), um eine Position der mittleren Spurstange (140) anzupassen, Folgendes umfasst:

Bestimmen, durch die Steuereinheit (510), einer Zielposition der ersten Verbindungsstange (142) und einer Zielposition der zweiten Verbindungsstange (143) basierend auf dem Ziellenkwinkel des ersten Lenkrads (221) und dem Ziellenkwinkel des zweiten Lenkrads (222);
Bestimmen, durch die Steuereinheit (510), einer Ziellänge der mittleren Spurstange (140) basierend auf der Zielposition der ersten Verbindungsstange (142) und der Zielposition der zweiten Verbindungsstange (143);
Berechnen, durch die Steuereinheit (510), eines Zieldrehwinkels der dritten Verbindungsstange (141) in dem unabhängigen Lenkmechanismus (100) basierend auf der Ziellänge; und

Steuern, durch die Steuereinheit (510) basierend auf dem Zieldrehwinkel, des dritten Servomotors (130), um die Länge der mittleren Spurstange (140) an die Ziellänge anzupassen, und Steuern, basierend auf der Zielposition der ersten Verbindungsstange (142) und der Zielposition der zweiten Verbindungsstange (143), des normalen Servomotors in dem ersten Servomotor (110) oder dem zweiten Servomotor (120), um die erste Verbindungsstange (142) und die zweite Verbindungsstange (143) an eine entsprechende Zielposition anzupassen.

**15.** Verfahren nach Anspruch 14, wobei

die zwei Enden der dritten Verbindungsstange (141) mit der ersten Verbindungsstange (142) und der zweiten Verbindungsstange (143) über die Schraubgewinde verbunden sind; und

der Zieldrehwinkel die folgende Formel erfüllt:

$$\theta = \frac{L - L_0}{2i_{ang}},$$

wobei

L die Ziellänge der mittleren Spurstange (140) ist, $L_0$ eine kürzeste Länge der mittleren Spurstange (140) ist und $i_{ang}$ eine Steigung des Schraubgewindes ist.

## Revendications

**1.** Un mécanisme de direction indépendant (100), comprenant :

un premier moteur assisté (110), un deuxième moteur assisté (120), un troisième moteur assisté (130) et un tirant intermédiaire (140), dans lequel

le tirant intermédiaire (140) comprend une première bielle (142), une deuxième bielle (143), et une troisième bielle (141) ;

deux extrémités de la troisième bielle (141) sont reliées à la première bielle (142) et à la deuxième bielle (143) ;

le premier moteur assisté (110) est configuré pour commander la première bielle (142) pour se déplacer le long d'une direction axiale du tirant intermédiaire (140) ;

le deuxième moteur assisté (120) est configuré pour commander la deuxième bielle (143) pour se déplacer le long de la direction axiale du tirant intermédiaire (140) ; et

le troisième moteur assisté (130) est configuré pour commander la troisième bielle (141) pour tourner, pour entraîner la première bielle (142) et la seconde bielle (143) pour s'approcher ou s'éloigner l'une de l'autre le long de la direction axiale du tirant intermédiaire (140).

**2.** Mécanisme de direction indépendant (100) selon la revendication 1, dans lequel la troisième bielle (141) est de structure creuse, et les deux extrémités de la troisième bielle (141) sont reliées à la première bielle (142) et à la deuxième bielle (143) par l'intermédiaire de filetages.

**3.** Mécanisme de direction indépendant (100) selon la revendication 2, dans lequel les filetages aux deux extrémités de la troisième bielle (141) sont entraînés en dans des directions opposées.

**4.** Mécanisme de direction indépendant (100) selon l'une quelconque des revendications 1 à 3, dans lequel le mécanisme de direction indépendant (100) comprend également :

une première partie de transmission (150), une deuxième partie de transmission (160) et une troisième partie de transmission (170), dans lesquelles

le premier moteur assisté (110) commande, au moyen de la première partie de transmission (150), le déplacement de la première bielle (142) le long de la direction axiale du tirant intermédiaire (140) ;

le deuxième moteur assisté (120) commande, en utilisant la deuxième partie de transmission (160), la deuxième bielle (143) pour se déplacer le long de la direction axiale du tirant intermédiaire (140) ; et

le troisième moteur assisté (130) commande la rotation de la troisième bielle (141) au moyen de la troisième partie de transmission (170).

**5.** Mécanisme de direction indépendant (100) selon la revendication 4, dans lequel

la première partie de transmission (150) comprend un premier engrenage (152) ;
le premier engrenage (152) est relié à la première bielle (142) par l'intermédiaire d'un filetage ; et
le premier moteur assisté (110) entraîne le premier engrenage (152) en rotation, afin de commander la première bielle (142) pour se déplacer le long de la direction axiale du tirant intermédiaire (140).

6. Mécanisme de direction indépendant (100) selon la revendication 4 ou 5, dans lequel

la deuxième partie de transmission (160) comprend un deuxième engrenage (162) ;
le deuxième engrenage (162) est relié à la deuxième bielle (143) par l'intermédiaire d'un filetage ; et
le second moteur assisté (120) entraîne le second engrenage (162) en rotation, afin de commander la seconde bielle (143) pour qu'elle se déplace le long de la direction axiale du tirant intermédiaire (140).

7. Mécanisme de direction indépendant (100) selon l'une quelconque des revendications 4 à 6, dans lequel

la troisième partie de transmission (170) comprend un troisième engrenage (172) ;
un bossage de guidage (173) disposé selon la direction axiale du tirant intermédiaire (140) est disposé sur une surface de la troisième bielle (141) ;
une rainure de guidage (174) correspondent au bossage de guidage (173) est disposée sur le troisième engrenage (172) ;
le troisième engrenage (172) est relié à la troisième bielle (141) par l'intermédiaire de la rainure de guidage (174) et du bossage de guidage (173) ; et
le troisième moteur assisté (130) entraîne le troisième engrenage (172) en rotation, afin de commander la rotation de la troisième bielle (141).

8. Système de direction indépendant (200, 500), comprenant :

un premier volant (221), un deuxième volant (222), et un mécanisme de direction indépendant (100) selon l'une quelconque des revendications 1 à 7, dans lequel
la première bielle (142) du mécanisme de direction indépendant (100) est reliée au premier volant (221) ;
la deuxième bielle (143) du mécanisme de direction indépendant (100) est reliée au deuxième volant (222) ;
le premier moteur assisté (110) dans le mécanisme de direction indépendant (100) est configuré pour commander la première bielle (142) pour se déplacer le long de la direction axiale du tirant intermédiaire (140) dans le mécanisme de direction indépendant (100), pour permettre la rotation du premier volant (221) ; et
le second moteur assisté (120) dans le mécanisme de direction indépendant (100) est configuré pour commander la deuxième bielle (143) pour se déplacer le long de la direction axiale du tirant intermédiaire (140), dans le mécanisme de direction indépendant (100), pour permettre la rotation du deuxième volant (222).

9. Système de direction indépendant (200, 500) selon la revendication 8, dans lequel le système de direction indépendant (200, 500) comprend également un premier porte-fusée de direction (201), un deuxième porte-fusée de direction (202), un premier pivot de fusée de direction (211), et un deuxième pivot de fusée de direction (212), dans lequel

le premier volant (221) est relié au premier pivot de fusée de direction (211) par l'intermédiaire du premier porte-fusée de direction (201), et le premier porte-fusée de direction (201) est relié à la première bielle (142) ;
le premier moteur assisté (110) est configuré pour commander la première bielle (142) pour se déplacer le long de la direction axiale du tirant intermédiaire (140), pour permettre au premier porte-fusée de direction (201) d'entraîner le premier volant (221) en rotation autour du premier pivot de fusée de direction (211) ;
le deuxième volant (222) est relié au deuxième pivot de fusée de direction (212) par l'intermédiaire du deuxième porte-fusée de direction (202), et le deuxième porte-fusée de direction (202) est relié à la deuxième bielle (143) ; et
le second moteur assisté (120) est configuré pour commander la seconde bielle (143) pour se déplacer le long de la direction axiale du tirant intermédiaire (140), pour permettre au second porte-fusée de direction (202) d'entraîner le second volant de direction (222) pour tourner autour du second pivot de fusée de direction (212).

10. Système de direction indépendant (200) selon la revendication 8 ou 9, dans lequel le système de direction indépendant (200, 500) comprend également :

un premier tirant (231) et un deuxième tirant (232), dans lesquels
une extrémité du premier tirant (231) est reliée à la première bielle (142), et l'autre extrémité du premier tirant (231) est reliée au premier porte-fusée de direction (201) ; et

une extrémité du second tirant (232) est reliée à la seconde bielle (143), et l'autre extrémité du second tirant (232) est reliée au second porte-fusée de direction (202).

11. Procédé de commande d'un système de direction indépendant (200, 500), dans lequel le système de direction indépendant (200, 500) comprend une unité de commande (510), un premier volant (221), un second volant (222), et le mécanisme de direction indépendant (100) selon l'une quelconque des revendications 1 à 7, dans lequel le premier volant (211) et le second volant (222) sont respectivement reliés à la première bielle (142) et à la seconde bielle (143) du tirant intermédiaire (140) dans le mécanisme de direction indépendant (100) ; et

le procédé comprend :

déterminer, par l'unité de commande (510), un angle de braquage cible du premier volant (211) et un angle de braquage cible du deuxième volant (222) ; et

lorsque le premier moteur assisté (110) ou le deuxième moteur assisté (120) dans le mécanisme de direction indépendant (100) est défectueux, commander, par l'unité de commande (510), le troisième moteur assisté (130) dans le mécanisme de direction indépendant (100) pour ajuster une longueur de la bielle intermédiaire (140) dans le mécanisme de direction indépendant (100) ; et commander un moteur assisté normal dans le premier moteur assisté (110) ou le deuxième moteur assisté (120) pour régler une position du tirant intermédiaire (140), de telle sorte que le tirant intermédiaire (140) entraîne le premier volant (221) et le second volant (222) en rotation jusqu'à un angle de braquage cible correspondant.

12. Procédé selon la revendication 11, dans lequel le procédé comprend également :

lorsque le premier moteur assisté (110) et le second moteur assisté (120) sont normaux, commander, par l'unité de commande (510), le premier moteur assisté (110) et le second moteur assisté (120) pour ajuster la longueur du tirant intermédiaire (140) et la position du tirant intermédiaire (140), de sorte que le tirant intermédiaire (140) entraîne le premier volant (221) et le second volant (222) pour tourner vers l'angle de braquage cible correspondant.

13. Procédé selon la revendication 11 ou 12, dans lequel le système de direction indépendant (500) comprend une première ECU (521), une deuxième ECU (522), et une troisième ECU (523), dans lequel la première ECU (521) est configurée pour commander le premier moteur assisté (110), la deuxième ECU (522) est configurée pour commander le deuxième moteur assisté (120), et la troisième ECU (523) est configurée pour commander le troisième moteur assisté (130) ; et

le procédé comprend également :

recevoir, par l'unité de commande (510), des premières informations envoyées par la première ECU (521), les premières informations étant utilisées pour indiquer si le premier moteur assisté (110) est défectueux ;

recevoir, par l'unité de commande (510), des secondes informations envoyées par la deuxième ECU (522), les secondes informations étant utilisées pour indiquer si le second moteur assisté (120) est défectueux ; et

recevoir, par l'unité de commande (510), des troisièmes informations envoyées par la troisième ECU (523), les troisièmes informations étant utilisées pour indiquer si le troisième moteur assisté (130) est défectueux.

14. Procédé selon la revendication 13, dans lequel la commande, par l'unité de commande (510), du troisième moteur assisté (130) dans le mécanisme de direction indépendant (100) pour régler une longueur du tirant médian (140) dans le mécanisme de direction indépendant (100) ; et la commande d'un moteur assisté normal dans le premier moteur assisté (110) ou le deuxième moteur assisté (120) pour régler une position du tirant intermédiaire (140) comprend :

déterminer, par l'unité de commande (510), une position cible de la première bielle (142) et une position cible de la seconde bielle (143) sur la base de l'angle de braquage cible du premier volant (221) et de l'angle de braquage cible du second volant (222) ;

déterminer, par l'unité de commande (510), d'une longueur cible du tirant intermédiaire (140) sur la base de la position cible de la première bielle (142) et de la position cible de la seconde bielle (143) ;

calculer, par l'unité de commande (510), un angle de rotation cible de la troisième bielle (141) dans le mécanisme de direction indépendant (100) sur la base de la longueur cible ; et

commander, par l'unité de commande (510) sur la base de l'angle de rotation cible, le troisième moteur assisté (130) pour ajuster la longueur du tirant intermédiaire (140) à la longueur cible, et commander, sur la base de la position cible de la première bielle (142) et de la position cible de la seconde bielle (143), le moteur assisté normal dans le premier moteur assisté (110) ou le second moteur assisté (120) pour ajuster la première bielle (142) et la seconde bielle (143) à une position cible correspondante.

**15.** Procédé selon la revendication 14, dans lequel deux extrémités de la troisième bielle (141) sont reliées à la première bielle (142) et à la deuxième bielle (143) à travers le nouveau filetage ; et

l'angle de rotation cible répond à la formule suivante :

$$\theta = \frac{L - L_0}{2i_{ang}},$$

dans lequel
L est la longueur cible du tirant intermédiaire (140), L0 est la longueur la plus courte du tirant intermédiaire (140), et i ang est un pas de vis du filetage de vis.

Inner steering
radius

Outer steering
radius

Steering center

FIG. 1

1  2  3  M  4  5  6  7
M  M

FIG. 2

110  120
130
150  160
140  170
142  142
141

**100**

FIG. 3

FIG. 4

FIG. 5

FIG. 6

FIG. 7

FIG. 8

EP 4 194 318 B1

FIG. 9

FIG. 10

FIG. 11

FIG. 12

EP 4 194 318 B1

FIG. 13

FIG. 14

521

First
ECU

110

140

150

142 141

170

130

Third
ECU

160

120

Second
ECU

522

523

First
sensor

531

Third
sensor

533

Second
sensor

532

Control
unit

510

**500**

FIG. 15

| 610 |
| --- |
| Determine a target steering angle |

| 620 |
| --- |
| Control a power-assisted motor to adjust a first steering wheel and a second steering wheel to a target steering angle |

FIG. 16

FIG. 17

EP 4 194 318 B1

810

Determine a target position of a first connecting rod and a target position of a second connecting rod

820

Determine a target length of a middle tie rod

830

Determine a target rotation angle of a third connecting rod

840

Control a power-assisted motor for adjustment

FIG. 18

Control unit 2400

Generation unit 2410

Sending unit 2420

FIG. 19

Control unit 2500

| Memory 2510 | | Processor 2520 |

Communications interface 2530

FIG. 20